# EUROPEAN PATENT APPLICATION

(11) **EP 4 604 667 A1**
(43) Date of publication of application: **20.08.2025**
(21) Application number: 24157733.7
(22) Date of filing: 15.02.2024
(51) Int. Cl.: H04W 76/40

(54) **INDICATORS FOR THE CONTINUITY INFORMATION MULTICAST MBS RADIO BEARER HANDLING**

(71) Applicant: Nokia Technologies Oy, 02610 Espoo (FI)
(72) Inventor: MALKAMÄKI, Esa Mikael, Espoo (FI); GODIN, Philippe, Versailles (FR); NARAYANAN, Subin, Oulu (FI); ELMALI, Ugur Baran, Munich (DE); M. SOLEYMANI, Dariush, Nürnberg (DE); NADAF, Salman, Munich (DE)
(74) Representative: Nokia EPO representatives

(57) **Abstract**

Methods and systems are provided for multicast Multicast Broadcast Service, MBS, Radio Bearer, MRB, handling, after cell reselection of a user equipment, UE, to a cell of a target base station, wherein the UE was released from an RRC_CONNECTED mode to an RRC_INACTIVE mode by a source base station. The UE transmits a request for transition from RRC_INACTIVE mode to RRC_CONNECTED mode to the target base station and, when reception of at least one multicast MRB of an MBS session was not continued in the RRC_INACTIVE mode, receives a request to reestablish a packet data convergence protocol, PDCP, entity and to initialize PDCP state variables of the at least one multicast MRB of the MBS session from the target base station.

## Description

### THECHNICAL FIELD

The subject disclosure generally relates to wireless communication systems and, in particular, to multicast MBS radio bearer handling, or to enablers thereof. Yet more particularly, the subject disclosure provides methods and apparatuses of multicast MBS radio bearer handling after cell reselection of a user equipment in radio resource control inactive mode towards a new serving base station.

### BACKGROUND

Wireless telecommunication systems, also referred to mobile communication systems, are under constant development. When data packets are transmitted over a dedicated channel or resource from one entity to another, e.g., from one user equipment (UE) to another UE, this is called one-to-one or unicast communication and forms the basis of most mobile communications today. However, there exists also the need to transmit data packets from one entity to many other entities in mobile communication at the same time. Such one-to-many communication is called broadcasting and multicasting communication and may, e.g., be relevant for mission critical group communication of emergency services and the like.

In 3GPP mobile communication systems, such as in new radio (NR) / 5th generation (5G) mobile communication systems, multicast broadcast services (MBS) have been defined for providing such one-to-many communication is supported. A broadcast communication thereby relates to a communication in which data is transmitted to all users in a broadcast service area, whereas multicast communication relates to a communication in which data is transmitted to a dedicated set of users. A multicast communication of an MBS in NR/5G is supported by one or more multicast MBS radio bearers (MRB) between the serving base station and the UEs.

Generally, multicast is preferred over broadcast for group communications in terms of reliability since the UE can confirm correct reception of the transmitted data packet but broadcast has also its advantages. As long UEs are in a connected state with the network, the reception of multicast communication is not faced with any issues. However, when a UE is an inactive state, radio bearers (except broadcast MRBs) are usually suspended and no multicast MBS can be further provided.

In Release 17 of 5G, when a UE is released to radio resource control, RRC, inactive (RRC_INACTIVE) mode, also denoted as RRC_INACTIVE state, all multicast MRBs associated with the corresponding MBS session(s) are suspended. In Release 18 of 5G, provision of MBS multicast in RRC_INACTIVE will be introduced and multicast MRBs that are associated with an MBS session that is not provided in RRC_INACTIVE are still suspended. However, when a UE transitions from RRC _INACTIVE to an RRC connected (RRC_CONNECTED) mode, also denoted as RRC_CONNECTED state, the respective multicast MRBs are fully reestablished, which increases a transmission delay.

Hence, methods and apparatuses of multicast MBS radio bearer handling after cell reselection of a user equipment in radio resource control inactive mode towards a new serving base station are herein presented.

### SUMMARY

According to a first aspect of the subject disclosure, a method of multicast Multicast Broadcast Service, MBS, Radio Bearer, MRB, handling performed by a target base station after cell reselection of a user equipment, UE, to a cell of the target base station is provided. The UE was released from a Radio Resource Control, RRC, connected, RRC_CONNECTED, mode to an RRC inactive, RRC_INACTIVE, mode by a source base station. The method comprises receiving a request for transition from RRC_INACTIVE mode to RRC_CONNECTED mode from the UE, receiving continuity information, wherein the continuity information indicates whether or not at least one multicast MRB of an MBS session was continued to be received by the UE in the RRC_INACTIVE mode, and in response to the continuity information indicating that the at least one multicast MRB of the MBS session was not continued in the RRC_INACTIVE mode, requesting the UE, in a message for transition from RRC_INACTIVE mode to RRC_CONNECTED mode, to reestablish a packet data convergence protocol, PDCP, entity and to initialize PDCP state variables for the at least one multicast MRB of the MBS session.

According to a second aspect of the subject disclosure, a method of multicast Multicast Broadcast Service, MBS, Radio Bearer, MRB, handling performed by a source base station after cell reselection of a user equipment, UE, to a cell of a target base station is provided. The UE was released from a Radio Resource Control, RRC, connected, RRC_CONNECTED, mode to an RRC inactive, RRC_INACTIVE, mode by the source base station. The method comprises receiving a UE context retrieval request from the target base station, and transmitting continuity information to the target base station, wherein the continuity information indicates whether or not at least one multicast MRB of an MBS session was continued to be received by the UE in the RRC INACTIVE mode.

According to a third aspect of the subject disclosure, a method of multicast Multicast Broadcast Service, MBS, Radio Bearer, MRB, handling performed by a user equipment, UE, after cell reselection to a cell of a target base station is provided. The UE was released from a Radio Resource Control, RRC, connected, RRC_CONNECTED, mode to an RRC inactive, RRC_INACTIVE, mode by a source base station. The method comprises transmitting a request for transition from RRC_INACTIVE mode to RRC_CONNECTED mode to the target base station, and when reception of at least one multicast MRB of an MBS session was not continued in the RRC_INACTIVE mode, receiving, in a message for transition from RRC_INACTIVE mode to RRC_CONNECTED mode, a request to reestablish a packet data convergence protocol, PDCP, entity and to initialize PDCP state variables of the at least one multicast MRB of the MBS session from the target base station and reestablishing the packet data convergence protocol, PDCP, entity and initializing the PDCP state variables of the at least one multicast MRB of the MBS session when transitioning from RRC_INACTIVE mode to RRC_CONNECTED mode.

According to a fourth aspect of the subject disclosure, an apparatus of a base station for providing multicast Multicast Broadcast Service, MBS, Radio Bearer, MRB, handling after cell reselection of a user equipment, UE, to a cell of a target base station is provided. The UE was released from a Radio Resource Control, RRC, connected, RRC_CONNECTED,mode to an RRC inactive, RRC_INACTIVE, mode by a source base station. The apparatus being configured to execute methods as described herein.

According to a fifth aspect of the subject disclosure, an apparatus of a user equipment, UE, for providing multicast Multicast Broadcast Service, MBS, Radio Bearer, MRB, handling after cell reselection to a cell of a target base station is provided. The UE was released from a Radio Resource Control, RRC, connected, RRC_CONNECTED,mode to an RRC inactive, RRC_INACTIVE, mode by a source base station. The apparatus being configured to execute the methods as described herein.

Further embodiments and features are defined by the dependent claims.

The above-noted aspects and features may be implemented in systems, apparatuses, methods, articles and non-transitory computer-readable media depending on the desired configuration. The subject disclosure may be implemented in and used with a number of different types of devices, including but not limited to cellular phones, tablet computers, wearable computing devices, portable media players, and any of various other computing devices.

This summary is intended to provide a brief overview of some of the aspects and features according to the subject disclosure. Accordingly, it will be appreciated that the above-described features are merely examples and should not be construed to narrow the scope of the subject disclosure in any way. Other features, aspects, and advantages of the subject disclosure will become apparent from the following detailed description, drawings and claims.

### TERMINOLOGY

To facilitate understanding on the terminologies in the subject disclosure, the following list of the most relevant abbreviations is provided:
LCID: Logical Channel ID
MBS: Multicast Broadcast Service
MCCH: MBS or Multicast Control Channel
MRB: MBS Radio Bearer
PDCP: Packet Data Convergence Protocol
RRC: Radio Resource Control

### BRIEF DESCRIPTION OF THE DRAWINGS

A better understanding of the subject disclosure can be obtained when the following detailed description of various embodiments is considered in conjunction with the following drawings, in which:
FIG. 1 shows a schematic diagram of an example wireless network;
FIG. 2 shows a schematic diagram of an example wireless device;
FIG. 3 shows a schematic diagram of an example network node;
FIG. 4 presents a flow chart of a method performed by a target base station of multicast MBS radio bearer handling with continuity information being provided according to an embodiment.
FIG. 5 presents a flow chart of a method performed by a source base station of multicast MBS radio bearer handling with continuity information being provided according to an embodiment.
FIG. 6 presents a flow chart of a method performed by a UE of multicast MBS radio bearer handling with continuity information being provided according to an embodiment.
FIG. 7 presents a flow chart of a method performed by a UE of multicast MBS radio bearer handling without continuity information being provided according to an embodiment.
FIG. 8 presents a flow chart of a method performed by a target base station of multicast MBS radio bearer handling without continuity information being provided according to an embodiment.
FIG. 9 shows a message signaling diagram of messages sent for transition from RRC INACTIVE mode to RRC_CONNECTED mode.
FIG. 10 shows a message signaling diagram of multicast MBS radio bearer handling with continuity information being provided from a source cell according to an embodiment.
FIG. 11 shows a message signaling diagram of multicast MBS radio bearer handling with continuity information being provided from the UE according to an embodiment.
FIG. 12 shows a message signaling diagram of multicast MBS radio bearer handling without continuity information being provided according to an embodiment.

### DETAILED DESCRIPTION

The examples and embodiments set forth below represent information to enable those skilled in the art to practice the subject disclosure. Upon reading the following description in light of the accompanying drawing figures, those skilled in the art will understand the concepts of the description and will recognize applications of these concepts not particularly addressed herein. It should be understood that these concepts and applications fall within the scope of the description.

In the following description, numerous specific details are set forth. However, it is understood that embodiments may be practiced without these specific details. In other instances, well-known circuits, structures, and techniques have not been shown in detail in order not to obscure the understanding of the description. Those of ordinary skill in the art, with the included description, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

As used herein, "plurality" means two or more. As used herein, a "set" of items may include one or more of such items. As used herein, whether in the subject disclosure or the claims, the terms "comprising", "including", "carrying", "having", "containing", "involving", and the like are to be understood to be open-ended, i.e., to mean including but not limited to. Only the transitional phrases "consisting of" and "consisting essentially of", respectively, are closed or semi-closed transitional phrases with respect to claims. Use of ordinal terms such as "first", "second", "third", etc., in the claims or the subject disclosure to modify an element does not by itself connote any priority, precedence, or order of one element over another or the temporal order in which acts of a method are performed, but are used merely as labels to distinguish one element having a certain name from another element having a same name (but for use of the ordinal term) to distinguish the elements. As used herein, "and/or" and "at least one of" means that the listed items are alternatives, but the alternatives also include any combination of the listed items.

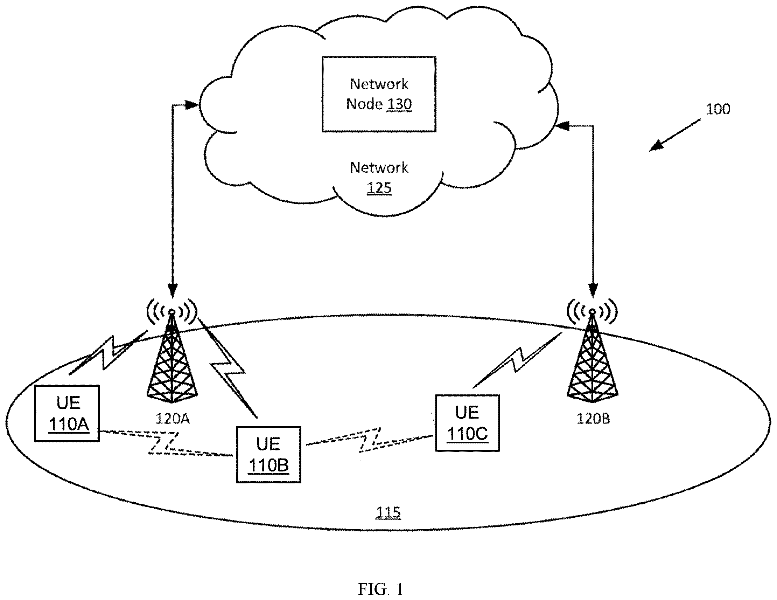

Before explaining the examples according to the subject disclosure in detail, certain general principles of a wireless communication system are briefly explained with reference to FIGS. 1 to 3 to assist in understanding the technology underlying the described examples.

FIG. 1 illustrates an example of a wireless network 100 that may be used for wireless communications. Wireless network 100 includes wireless devices, such as UEs 110 (e.g., 110A-110B), and network nodes, such as radio access nodes 120 (e.g., 120A-120B) (e.g., eNBs, gNBs, etc.), connected to one or more network nodes 130 over an interconnecting network 125. The network 100 may use any suitable deployment scenarios. UEs 110 within coverage area 115 may each be capable of communicating directly with radio access nodes 120 over a wireless or air interface. In some embodiments, UEs 110 may also be capable of communicating with each other via D2D communication.

As an example, UE 110A may communicate with radio access node 120A over a wireless or air interface. That is, UE 110A may transmit wireless signals to and/or receive wireless signals from radio access node 120A. The wireless signals may contain voice traffic, data traffic, control signals, and/or any other suitable information. If a UE moves in the area, it may start communication (or more generally connection) with radio access node 120B and terminate communication (or more generally connection) with radio access node 120B. In such cases, radio access node 120A may be denoted as source base station or last serving base station and radio access node 120B may be denoted as target base station or new serving base station.

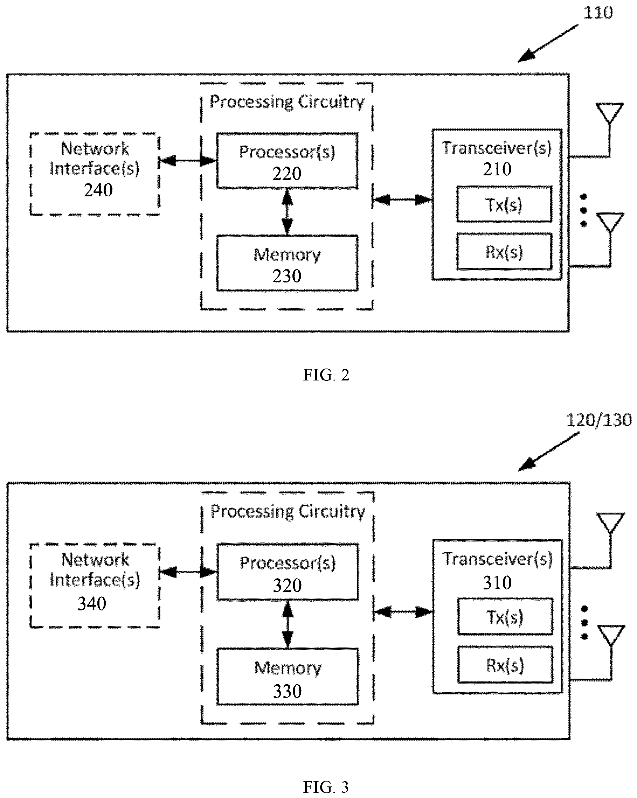

As used herein, the term "user equipment" (UE) has the full breadth of its ordinary meaning and may refer to any type of wireless device which can communicate with a network node and/or with another UE in a cellular or mobile or wireless communication system. Examples of UE are target device, D2D UE, machine type UE or UE capable of machine-to-machine (M2M) communication, personal digital assistant, tablet, mobile terminal, smart phone, laptop embedded equipped (LEE), laptop mounted equipment (LME), USB dongles, ProSe UE, vehicle-to-vehicle (V2V) UE, V2X UE, MTC UE, eMTC UE, FeMTC UE, UE Cat 0, UE Cat Ml, narrow band IoT (NB-IoT) UE, UE Cat NB1, etc. Example embodiments of a UE are described in more detail below with respect to FIG. 2.

In some embodiments, an area of wireless signal coverage 115 associated with a radio access node 120 may be referred to as a cell. However, particularly with respect to the 5^{th} generation (5G) / New Radio (NR) mobile communication concepts, beams, may be used within cells for communication.

With respect to a beam-based mobile communication system, the radio access node 120 (base station) may transmit a beamformed signal to the UE 110 in one or more transmit directions (transmission beam, Tx beam). The UE 110 may receive the beamformed signal from the base station 120 in one or more receive directions (reception beam, Rx beam). The UE 110 may also transmit a beamformed signal to the base station 120 in one or more directions and the base station 120 may receive the beamformed signal from the UE 110 in one or more directions. The base station 120 and the UE 110 may determine the best receive and transmit directions, e.g., *best* in the sense of these directions leading to the highest link quality or fulfilling other quality conditions in the most suitable manner, for each of the base station/UE pairs.

The interconnecting network 125 may refer to any interconnecting system capable of transmitting audio, video, signals, data, messages, etc., or any combination of the preceding. The interconnecting network 125 may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

In some embodiments, the network node 130 may be a core network node, managing the establishment of communication sessions and other various other functionalities for UEs 110. Examples of network node 130 may include mobile switching center (MSC), MME, serving gateway (SGW), packet data network gateway (PGW), operation and maintenance (O&M), operations support system (OSS), SON, positioning node (e.g., Enhanced Serving Mobile Location Center, E-SMLC), location server node, MDT node, etc. UEs 110 may exchange certain signals with the network node 130 using the non-access stratum (NAS) layer. In non-access stratum signaling, signals between UEs 110 and the network node 130 may be transparently passed through the radio access network. In some embodiments, radio access nodes 120 may interface with one or more network nodes 130 over an internode interface.

As used herein, the term "network node" has the full breadth of its ordinary meaning and may correspond to any type of radio access node (or radio network node) or any network node, which can communicate with a UE and/or with another network node in a cellular or mobile or wireless communication system. Examples of network nodes are NodeB, MeNB, SeNB, a network node may belonging to MCG or SCG, base station (BS), multi-standard radio (MSR) radio access node such as MSR BS, eNodeB, network controller, radio network controller (RNC), base station controller (BSC), relay, donor node controlling relay, base transceiver station (BTS), access point (AP), transmission point, transmission node, RRU, RRH, node in distributed antenna system (DAS), core network node (e.g., MSC, MME, etc.), O&M, OSS, Self-organizing Network (SON), positioning node (e.g., E-SMLC), MDT, test equipment, etc. Example embodiments of a network node are described in more detail below with respect to FIG. 3.

In some embodiments, radio access node 120 may be a distributed radio access node. The components of the radio access node 120, and their associated functions, may be separated into two main units (or sub-radio network nodes) which may be referred to as the central unit (CU) and the distributed unit (DU). Different distributed radio network node architectures are possible. For instance, in some architectures, a DU may be connected to a CU via dedicated wired or wireless link (e.g., an optical fiber cable) while in other architectures, a DU may be connected a CU via a transport network. Also, how the various functions of the radio access node 120 are separated between the CU(s) and DU(s) may vary depending on the chosen architecture.

In some embodiments, radio access nodes 120 may communicate with each other over terrestrial or other connections. The communication between the radio access nodes 120 may, e.g., in a 5G / NR communication system may be achieved by using an Xn interface connecting the radio access nodes 120.

Exemplary wireless communication systems are architectures standardized by the 3rd Generation Partnership Project (3GPP). A 3GPP based development is often referred to as the long-term evolution (LTE) of the Universal Mobile Telecommunications System (UMTS) radio-access technology (RAT). The various development stages of the 3GPP specifications are referred to as releases. More recent developments of the LTE are often referred to as LTE Advanced (LTE-A). The LTE (LTE-A) employs a radio mobile architecture known as the Evolved Universal Terrestrial Radio Access Network (E-UTRAN) and a core network known as the Evolved Packet Core (EPC). Base stations of such systems are known as evolved or enhanced Node Bs (eNBs) and provide E-UTRAN features such as user plane Packet Data Convergence/Radio Link Control/Medium Access Control/Physical layer protocol (PDCP/RLC/MAC/PHY) and control plane Radio Resource Control (RRC) protocol terminations towards the communication devices. Other RAT examples comprise those provided by base stations of systems that are based on technologies such as WLAN and/or Worldwide Interoperability for Microwave Access (WiMax). A base station can provide coverage for an entire cell or similar radio service area. Core network elements include Mobility Management Entity (MME), Serving Gateway (S-GW) and Packet Gateway (P-GW).

An example of a suitable communications system is the 5G or NR concept. Network architecture in NR may be similar to that of LTE-A. Base stations of NR systems may be known as next generation Node Bs (gNBs). Changes to the network architecture may depend on the need to support various radio technologies and finer Quality of Service (QoS) support, and some on-demand requirements for QoS levels to support Quality of Experience (QoE) of user point of view. Also network aware services and applications, and service and application aware networks may bring changes to the architecture. Those are related to Information Centric Network (ICN) and User-Centric Content Delivery Network (UC-CDN) approaches. NR may use multiple input-multiple output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilize network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes, or hosts. It should also be understood that the distribution of labour between core network operations and base station operations may differ from that of the LTE or even be non-existent.

An example 5G core network (CN) comprises functional entities. The CN is connected to a UE via the radio access network (RAN). An UPF (User Plane Function) whose role is called PSA (PDU Session Anchor) may be responsible for forwarding frames back and forth between the DN (data network) and the tunnels established over the 5G towards the UEs exchanging traffic with the data network (DN). The UPF is controlled by an SMF (Session Management Function) that receives policies from a PCF (Policy Control Function). The CN may also include an AMF (Access & Mobility Function).

Generally, all concepts disclosed herein may be applicable to different communication networks, comprising but not limited to LTE, LTE-A, 5G, 5G advanced, 6G, and other future or already implemented networks.

FIG. 2 is a schematic diagram of an apparatus for the UE. In an embodiment, the apparatus may comprise the UE, in yet another embodiment the apparatus is comprised in the UE, and in another embodiment the apparatus is the UE. The apparatus may comprise a wireless device. The apparatus may comprise at least one processor 220 and at least one memory 230 storing computer program instructions that, when executed by the at least one processor 220, cause the apparatus to carry out the embodiments of the UE 110 described herein. UE 110 includes a transceiver 210, processor 220, memory 230, and a network interface 240. In some embodiments, the transceiver 210 facilitates transmitting wireless signals to and receiving wireless signals from radio access node 120 (e.g., via transmitter(s) (Tx), receiver(s) (Rx) and antenna(s)). The processor 220 executes instructions to provide some or all of the functionalities described herein as being provided by UE 110, and the memory 230 stores the instructions executed by the processor 220. In some embodiments, the processor 220 and the memory 230 form processing circuitry.

The processor 220 may include any suitable combination of hardware to execute instructions and manipulate data to perform some or all of the described functions of UE 110 described herein. In some embodiments, the processor 220 may include, for example, one or more computers, one or more central processing units (CPUs), one or more microprocessors, one or more application specific integrated circuits (ASICs), one or more field programmable gate arrays (FPGAs) and/or other logic.

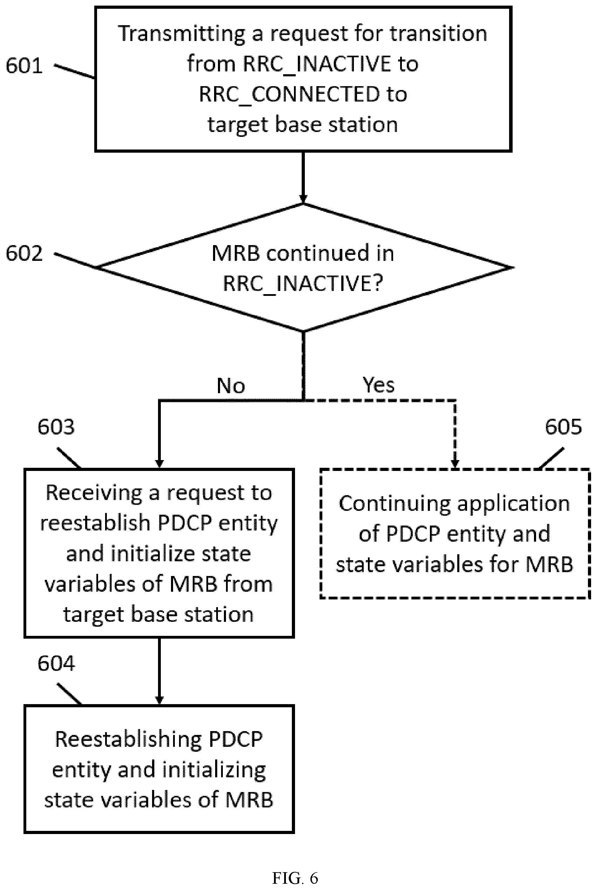

The memory 230 is generally operable to store instructions, such as a computer program, software, an application including one or more of logic, rules, algorithms, code, tables, etc. and/or other instructions capable of being executed by a processor 220. Examples of memory 230 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non- transitory computer-readable and/or computer-executable memory devices that store information, data, and/or instructions that may be used by the processor 220 of UE 110. For example, the memory 230 includes computer program code causing the processor 220 to perform processing according to the methods described herein, e.g., the method of FIGs. 6 to 8.

The network interface 240 is communicatively coupled to the processor 220 and may refer to any suitable device operable to receive input for UE 110, send output from UE 110, perform suitable processing of the input or output or both, communicate to other devices, or any combination thereof. The network interface 240 may include appropriate hardware (e.g., port, modem, network interface card, etc.) and software, including protocol conversion and data processing capabilities, to communicate through a network.

Other embodiments of UE 110 may include additional components beyond those shown in FIG. 2 that may be responsible for providing certain aspects of the wireless device's functionalities, including any of the functionalities described herein and/or any additional functionalities (including any functionality necessary to support the mechanisms according to the subject disclosure). As an example, UE 110 may include input devices and circuits, output devices, and one or more synchronization units or circuits, which may be part of the processor 220. Input devices include mechanisms for entry of data into UE 110. For example, input devices may include input mechanisms, such as a microphone, input elements, a display, etc. Output devices may include mechanisms for outputting data in audio, video and/or hard copy format. For example, output devices may include a speaker, a display, etc.

In some embodiments, the wireless device UE 110 may comprise a series of modules configured to implement the functionalities of the wireless device described herein. Moreover, in some embodiments, the UE 110 may also comprise means for the functionalities described herein.

It will be appreciated that the various modules may be implemented as combination of hardware and software, for instance, the processor, memory, and transceiver(s) of UE 110 shown in FIG. 2. Some embodiments may also include additional modules to support additional and/or optional functionalities.

FIG. 3 is a schematic diagram of an example of an apparatus for a radio access node 120 or network node 130. The apparatus may comprise at least one processor 320 and at least one memory 330 storing computer program instructions that, when executed by the at least one processor 320, cause the apparatus to carry out the embodiments of the network node 130 or radio access node 120 described herein. The example radio access node 120 or network node 130 may include one or more of a transceiver 310, processor 320, memory 330, and network interface 340. In some embodiments, the transceiver 310 facilitates transmitting wireless signals to and receiving wireless signals from wireless devices, such as UE 110 (e.g., via transmitter(s) (Tx), receiver(s) (Rx), and antenna(s)). The processor 320 executes instructions to provide some or all of the functionalities described herein as being provided by the radio access node 120 or the network node 130, the memory 330 stores the instructions executed by the processor 320. In some embodiments, the processor 320 and the memory 330 form processing circuitry. The network interface 340 can communicate signals to backend network components, such as a gateway, switch, router, Internet, Public Switched Telephone Network (PSTN), core network nodes or radio network controllers, etc.

The processor 320 can include any suitable combination of hardware to execute instructions and manipulate data to perform some or all of the described functions of the radio access node 120 or the network node 130, such as those described herein. In some embodiments, the processor 320 may include, for example, one or more computers, one or more central processing units (CPUs), one or more microprocessors, one or more application specific integrated circuits (ASICs), one or more field programmable gate arrays (FPGAs) and/or other logic.

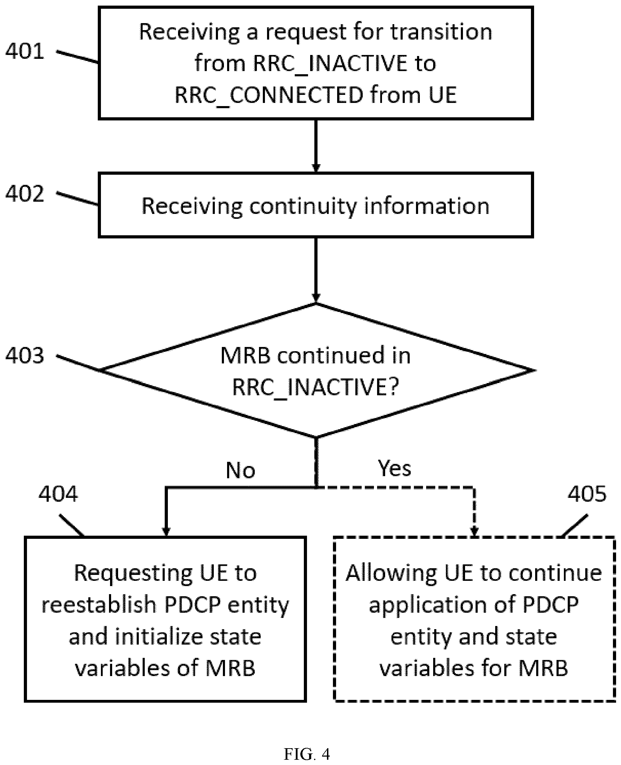

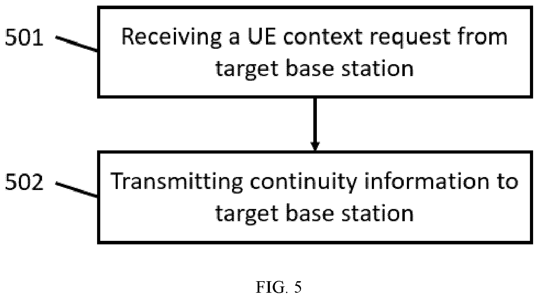

The memory 330 is generally operable to store instructions, such as a computer program, software, an application including one or more of logic, rules, algorithms, code, tables, etc. and/or other instructions capable of being executed by a processor 320. Examples of memory 330 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non- transitory computer-readable and/or computer-executable memory devices that store information. For example, the memory 330 includes computer program code causing the processor 320 to perform processing according to the methods described herein, e.g., the method of FIGs. 4 or 5.

In some embodiments, the network interface 340 is communicatively coupled to the processor 320 and may refer to any suitable device operable to receive input for the radio access node 120 or the network node 130, send output from the radio access node 120 or the network node 130, perform suitable processing of the input or output or both, communicate to other devices, or any combination of the preceding. The network interface 340 may include appropriate hardware (e.g., port, modem, network interface card, etc.) and software, including protocol conversion and data processing capabilities, to communicate through a network.

Other embodiments of the radio access node 120 or the network node 130 can include additional components beyond those shown in FIG. 3 that may be responsible for providing certain aspects of the node's functionalities, including any of the functionalities described herein and/or any additional functionalities (including any functionality necessary to support the solutions described herein). The various different types of radio access nodes or network nodes may include components having the same physical hardware but configured (e.g., via programming) to support different radio access technologies, or may represent partly or entirely different physical components.

Processors, interfaces, and memory similar to those described with respect to FIG. 3 may be included in other nodes (such as UE 110, radio access node 120, etc.). Other nodes may optionally include or not include a wireless interface (such as the transceiver described in FIG. 3).

In some embodiments, the radio access node 120 or the network node 130 may comprise a series of modules configured to implement the functionalities of the radio access node 120 or the network node 130 described herein. Moreover, in some embodiments, the radio access node 120 or the network node 130 may also comprise means for the functionalities described herein.

It will be appreciated that the various modules may be implemented as combination of hardware and software, for instance, the processor, memory, and transceiver(s) of the radio access node 120 or the network node 130 shown in FIG. 3. Some embodiments may also include additional modules to support additional and/or optional functionalities.

Before referring to FIGS. 4 to 12 and describing methods of multicast MBS radio bearer handling according to the disclosure, some background information and aspects related to the subject disclosure will be provided. It should be noted that all concepts described herein, although described, e.g., for one communication direction, e.g., for downlink communication, are applicable for the other direction as well, e.g., in the uplink (UL) communication. Moreover, concepts described for one entity, e.g., a UE 110, are applicable to another entity, e.g., a base station or network node 120, when considering for example another communication direction or another network setting as will be apparent to the skilled person.

Modern wireless communication networks support multicast broadcast services (MBS), such as 5G from Release 17 on. Point to Multi-Point (PTM) transmission is expected to efficiently provide MBS services to multiple users (i.e., UEs) by using the same radio framework as unicast transmission. In Release 17 of 5G, reception of a multicast service by the UEs in the RRC_CONNECTED state was provided. In addition, Release 17 specified broadcast reception in all RRC states.

Current discussion on Release 18 started with further enhancements to the 5G architecture to provide multicast and broadcast service such as enabling the reception of multicast services by the UEs in RRC_INACTIVE state for scalability and power saving purposes. Multicast MBS radio bearers (MRBs) were agreed to be continued in RRC _INACTIVE if a same logical channel identifier (LCID) was provided for the multicast MRB in PTM configuration either over an RRC release message, e.g., RRCRelease, or MBS or multicast control channel (MCCH). Furthermore, PTM configuration provided in RRCRelease may include packet data convergence protocol (PDCP) synchronization information for a multicast MRB, e.g., pdcpSync, which indicates that a PDCP counter (COUNT) for that MRB is synchronized across all cells in a whole radio access network (RAN) notification area (RNA). When a UE moves and reselects a cell within the RNA and pdcpSync is indicated for the multicast MRB, the multicast MRB can be continued, i.e., PDCP need not be reestablished and PDCP state variables need not be initialized when further receiving the MBS in RRC_INACTIVE state. The PDCP state variables may comprise, for example, at least one of the following parameters: a count value counting received PDCP SDUs (RX_NEXT), and a count value counting the first PDCP SDU not delivered to a higher layer (RX_DELIV). Other state variables are also possible.

In case a UE is in RRC_INACTIVE state, the UE may apply the configuration of the multicast service in the cell to continue receiving the multicast service. The cell may therefore broadcast system information blocks (SIBs) and MBS or multicast control channel (MCCH) periodically, so that the RRC_INACTIVE UEs can receive configuration for MBS and update to that.

A UE in the RRC_INACTIVE state should be able to move to another cell in a same RNA while receiving the multicast service without notifying the network and to be able to receive the same service also in a reselected newly camped cell, if the service is provided to the UEs in RRC_INACTIVE state. When the UE moves while it is in inactive mode, it makes cell reselections and multicast MRBs are currently handled in different ways:
a) If the MBS multicast session is not provided in RRC_INACTIVE state, the associated multicast MRBs (that were used in RRC_CONNECTED state and that were suspended after transitioning into RRC_INACTIVE) remain suspended.
b) If pdcpSync is configured for a given multicast MRB and UE reselects a cell within its RNA, the multicast MRB is continued, i.e., there is no PDCP reestablishment nor initialization of PDCP state variables.
c) If pdcpSync is not configured for a given multicast MRB and UE reselects to another cell within the same RNA, the corresponding multicast MRB is released and a new MRB is established in the reselected cell. This currently applies even when the multicast MRB has been previously continued from connected mode.

For the UE to be able to receive the service in the newly camped cell, the UE may first read the SIB of the cell that provides configuration for MCCH, wait for periodic MCCH to be scheduled, and learn how to receive a specific multicast service. Instead of the MCCH, there may be other signaling mechanisms to deliver the configuration of the multicast service to the UE, e.g. another control channel. Enabling multicast reception to the UEs in the RRC_INACTIVE state is a per-cell decision. Therefore, it is possible that the UE would not find the service being provided to the UEs in the RRC _INACTIVE state after reading the MCCH and then needs to reconnect to receive the service in RRC_CONNECTED state. In addition, it is possible that the service is not yet provided at all in the new cell, as there were no UEs that joined the multicast session in that cell before.

In summary, a multicast MRB could be continued in state transition from RRC _CONNECTED to RRC _INACTIVE by configuring in the PTM configuration for RRC _INACTIVE the same LCID which the UE was having in RRC _CONNECTED as well as when UE reselects to another cell within RNA if pdcpSync is configured for that multicast MRB in PTM configuration.

However, in state transition from RRC_INACTIVE to RRC_CONNECTED whenever the UE resumes in a cell of a new base station, e.g., gNB (being different than last serving gNB), the multicast MRB cannot be continued even if the multicast MRB would be in PDCP sync with the multicast MRB provided in RRC_CONNECTED mode in the new cell. The new gNB where the UE resumes the RRC connection does not know:
- which multicast MRBs have been continued in RRC_INACTIVE (same LCID is used for the multicast MRB in RRC_CONNECTED and RRC_INACTIVE),
- which have been replaced with new multicast MRBs in RRC_INACTIVE (different LCID is used for the multicast MRB in RRC_CONNECTED and RRC_INACTIVE), and
- which have been suspended (due to deactivated MBS session or due to temporarily no data).
The cases require different handling since the first and the last case can be handled without PDCP reestablishment whereas the second requires PDCP reestablishment.

Without knowledge about the cases and the respective configuration, the new gNB performs PDCP reestablishment and initialization of PDCP state variables for all multicast MRBs, which increases delay, e.g., due to reordering timer. It is noted that for data radio bearer (DRBs) such knowledge is not needed since all DRBs are suspended when the UE is released to RRC_INACTIVE and therefore there is no data traffic on those DRBs while the UE is in RRC_INACTIVE. In Release 17 of 5G same was true for multicast MRBs as well since all multicast MRBs were suspended when UE was released to RRC_INACTIVE. However, from Release 18 of 5G on, multicast MRBs can be configured to be received also in RRC_INACTIVE state and, thus, there is a need to implement an efficient multicast MRB handling method for UEs resuming from RRC_INACTIVE to RRC_CONNECTED in a new serving cell as is described herein.

The observations of the inventors starting from current state of Release 18 of 5G can be summarized as follows: When UE reselects a cell outside of its RAN notification area (RNA), or reselects a cell where MCCH is not transmitted or where the MBS multicast session is not provided in RRC_INACTIVE mode, or when UE is paged, the UE sends a request to the gNB for transition from RRC_INACTIVE to RRC_CONNECTED, e.g., a RRCResumeRequest as defined in 3GPP TS 38.331 Release 17 or later. Before sending the RRCResumeRequest, the UE restores the RRC configuration and robust header compression (ROHC) state from stored previous UE context (e.g., UE Inactive AS Context) except information of configuration of PDCP (e.g., parameter pdcp-Config).

The RRC configuration includes the multicast MRBs that the UE was having in connected mode before the UE was released to RRC _INACTIVE mode either in the same cell or in a different cell. The gNB responds with RRCResume as defined in 3GPP TS 38.331 Release 17 or later, which may contain a full configuration or a delta configuration on top of the restored configuration of the UE. In the latter case, UE also restores pdcp-Config from UE Inactive AS Context and performs radio bearer reconfiguration if RRCResume includes information on radio bearer configuration, e.g., radioBearerConfig, and resumes the multicast MRBs that are suspended. Inside radioBearerConfig it is possible to request PDCP reestablishment for some multicast MRBs and also provide information, e.g., parameter initialRX-DELIV, to initialize the PDCP state variables.

Depending on the multicast MRB and MBS multicast session there are at least three different kinds of restored MRBs:
1. Multicast MRBs that are suspended since the associated MBS session cannot be received in inactive mode; for such multicast MRBs no MBS data is sent while the UE is in inactive mode (behavior similar to Release 17).
2. Multicast MRBs that are continued in inactive mode (same LCID) and are continued also in cell reselection (pdcpSync); for such multicast MRBs, the UE has been receiving MBS data also while in inactive mode and therefore, the PDCP state variables can be assumed to be up-to-date.
3. Multicast MRBs for which the associated MBS multicast session was provided also in the inactive mode but via a different multicast MRB. These restored multicast MRBs are either released in cell reselection or they are "hanging". It may be preferred that these multicast MRBs are suspended. The resuming UE has stopped receiving MBS data via these multicast MRBs although MBS data is sent via these multicast MRBs for other UEs in connected mode. The resuming UE typically has received the same MBS session data over another multicast MRB established in inactive mode. The PDCP state variables of these multicast MRBs are typically not up-to-date.

When a UE resumes the multicast MRBs, for above indicated cases 1 and 2, the PDCP state variables can be assumed to be up-to-date and therefore, no PDCP reestablishment or initialization of PDCP state variables is needed whereas, for case 3, PDCP has to be reestablished, e.g., with parameter initialRX-DELIV, since the PDCP state variables most probably are not up-to-date and PDCP behavior for those multicast MRBs would be unpredictable if continued. The problem is that based on the stored UE Inactive AS Context fetched from the cell which released the UE to RRC_INACTIVE, the new gNB only knows that UE was having these multicast MRBs when it was last time in connected mode but does not have any knowledge whether the multicast MRB has been used in RRC _INACTIVE or whether the MBS session has been provided in RRC _INACTIVE but over another multicast MRB. Therefore, in practice, the new target gNB receiving the resume request has to reestablish and initialize the PDCP state variables for all the multicast MRBs without any enhancements.

For case 1 above, the inventors have recognized that it would be beneficial to continue the PDCP without reestablishment. If the PDCP is reestablished and initialRX-DELIV is configured, it is typically possible to give the correct initialRX-DELIV since in this case there is no transmission of MBS data while the UE is in inactive mode (the MBS session is either deactivated or there is temporarily no data). Thus, PDCP reestablishment and PDCP state variable initialization do not cause any harm.

For case 2 above, where connected mode multicast MRB is continued in inactive mode and UE is typically receiving MBS data also while in inactive mode, different cells may not be fully in sync, i.e., depending on the scheduling time in each cell, one cell may be behind or ahead of another cell. If the new cell, where the UE resumes, is behind the previous cell such that UE will receive duplicates of some PDCP SDUs in the new cell, it would be best not to initialize the PDCP state variables. However, if PDCP is reestablished and initialRX-DELIV is configured, UE initializes the RX_DELIV to a lower value than the UE was having before. When UE then received PDCP SDUs for the multicast MRB, RX_DELIV is not updated since the UE discards the duplicate SDUs and when the first new SDU is received, the UE has to start the reordering timer causing unnecessary delay for the new SDUs.

For case 3 above, where the PDCP state variables of the restored PDCP entities are typically not up-to-date, the PDCP reestablishment and initialization of the PDCP state variables are absolutely necessary. In the typical case, a lot of data has been sent via the connected mode multicast MRB while the UE was in inactive mode receiving the same data over another multicast MRB. Therefore, the PDCP state variable counting the received PDCP SDUs typically jumps significantly ahead. Duplicate detection is not possible if the MBS data has been received over another multicast MRB while in inactive mode. But that is unavoidable if network has decided to use different multicast MRB in the inactive mode.

In summary, for case 1, it does not matter whether the PDCP is reestablished and state variables initialized or not, both works equally well. For case 3, the PDCP reestablishment and initialization of PDCP state variables is necessary. For case 2, it would be beneficial to know whether the connected mode multicast MRB has been continued in inactive mode so that the target gNB where the UE requests to resume, could decide case by case whether to reestablish the PDCP and whether to initialize the PDCP state variables.

The herein presented implementations provide solution for handling all three cases in an efficient manner. Two general solutions were considered: The target base station could be made aware of whether a multicast MRB has been continued (with same LCID) or not (other LCID or suspended), either from source base station or from UE, or the UE may handle the reestablishment of MRBs on its own depending on whether a multicast MRB has been continued (with same LCID) or not (other LCID or suspended).

Now turning to FIG. 4, which presents a flow chart of a method performed by a target base station of multicast MBS radio bearer handling with continuity information being provided according to an embodiment. Multicast MBS radio bearer, MRB, handling is performed after cell reselection of a user equipment coming from a source base station and selecting the target base station. The user equipment may have reselected other cells in between while moving from the source cell to the target cell. The user equipment was previously released from a radio resource control connected, RRC_CONNECTED mode to a radio resource control inactive, RRC_INACTIVE, mode by the source base station.

In box 401, the target base station receives a request for transition from RRC_INACTIVE mode to RRC _CONNECTED mode from the user equipment. Such a request may be in the form of an RRCResumeRequest message. Thereafter and as shown in box 402, the target base station receives continuity information. The continuity information indicates whether or not a multicast MRB was continued to be received by the UE in the RRC INACTIVE mode.

The continuity information may be received from the source base station over an Xn interface as a part of a user equipment context message. The UE context message may, e.g., be a RETRIEVE UE CONTEXT RESPONSE message based on the message definition as in 3GPP TS 38.423 Release 17/18, and may be sent in response to a RETRIEVE UE CONTEXT REQUEST message from the target base station based on the message definition as in 3GPP TS 38.423 Release 17/18. The continuity information may be comprised in an RRC context information element or in a multicast broadcast service, MBS, session information element of the user equipment context message. The MBS session information element includes the continuity information at MBS session level or multicast MRB level.

For example, the RRC context information element in a RETRIEVE UE CONTEXT RESPONSE message may be comprised in a UE context information element and may include a HandoverPreparationInformation message based on the message definition as defined in 3GPP TS 38.331 Release 17/18. Alternatively, the HandoverPreparationInformation message is based on the message definition as in 3GPP TS 36.331 Release 17. The HandoverPreparationInformation message contains an AS-Config information element that includes an RRCReconfiguration information element, which includes radioBearerConfig information element, which includes a multicast MRB-ToAddMod-r17 field. This MRB-ToAddMod-r17 field may be extended and include a new field for indicating the continuity information. This field may be named continuePDCP-InInactive. In this example, the corresponding field definition of MRB-ToAddMod-r17 may be similar to the following definition of Table 1.

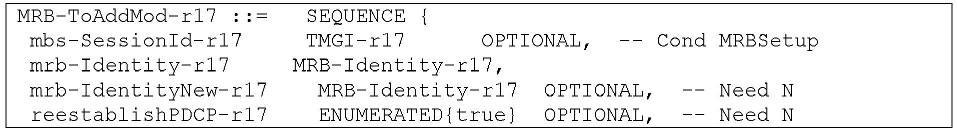

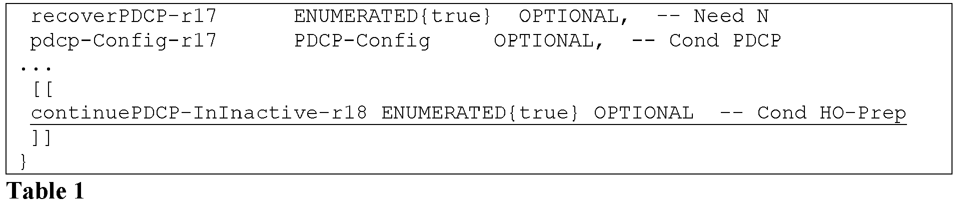

The field continuePDCP-InInactive may in this example be included by the source gNB when same LCID as in RRC_CONNECTED mode as well as pdcpSync were configured for the multicast MRB in RRC_INACTIVE mode (i.e., if the multicast MRB was continued by the UE when going from RRC_CONNECTED to RRC_INACTIVE and when reselecting to another cell within the RNA); otherwise it would not be present. This new field may never be sent to a UE and may only be used in HandoverPreparationInformation message, which is indicated by the condition HO-Prep in Table 1. Alternatively, the new field could indicate which multicast MRBs have not been continued in RRC_INACTIVE. In an alternative implementation, one or more of the fields reestablishPDCP or recoverPDCP may be reused to indicate which MRBs were continued in RRC_INACTIVE. For instance, reestablishPDCP could be set true if the corresponding multicast MRB has not been continued in RRC _INACTIVE mode. The proposed new field or reuse of existing fields for this new purpose are not part of the UE connected mode configuration but can still be stored by the last serving base station, i.e., source base station, as part of the UE Inactive AS context.

As another example, the RRC context information element in a RETRIEVE UE CONTEXT RESPONSE message may be comprised in a UE context information element and may include a HandoverPreparationInformation message based on the message definition as defined in 3GPP TS 38.331 Release 17/18. The HandoverPreparationInformation message contains an AS-Context information element that may be extended and include a new field for indicating the multicast MRB continuity information. This field may be named, for instance, multicastMRB-InactiveInfo and it may contain a list MRB-ContinueInactiveList. Each list element MRB-ContinueInactive tells whether the corresponding multicast MRB is continued in RRC _INACTIVE mode or not continued. The elements of MRB-ContinueInactiveList are in the same order as elements in the MRB-ToAddModList included into AS-Config. In this example, the corresponding field definition of AS-Context may be similar to the following definition of Table 1bis.

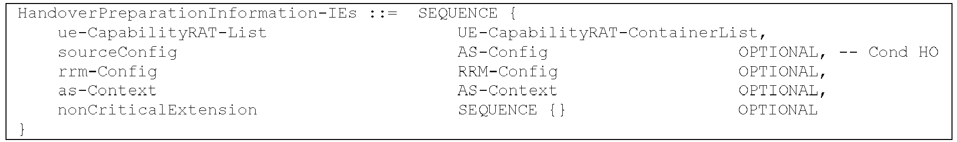

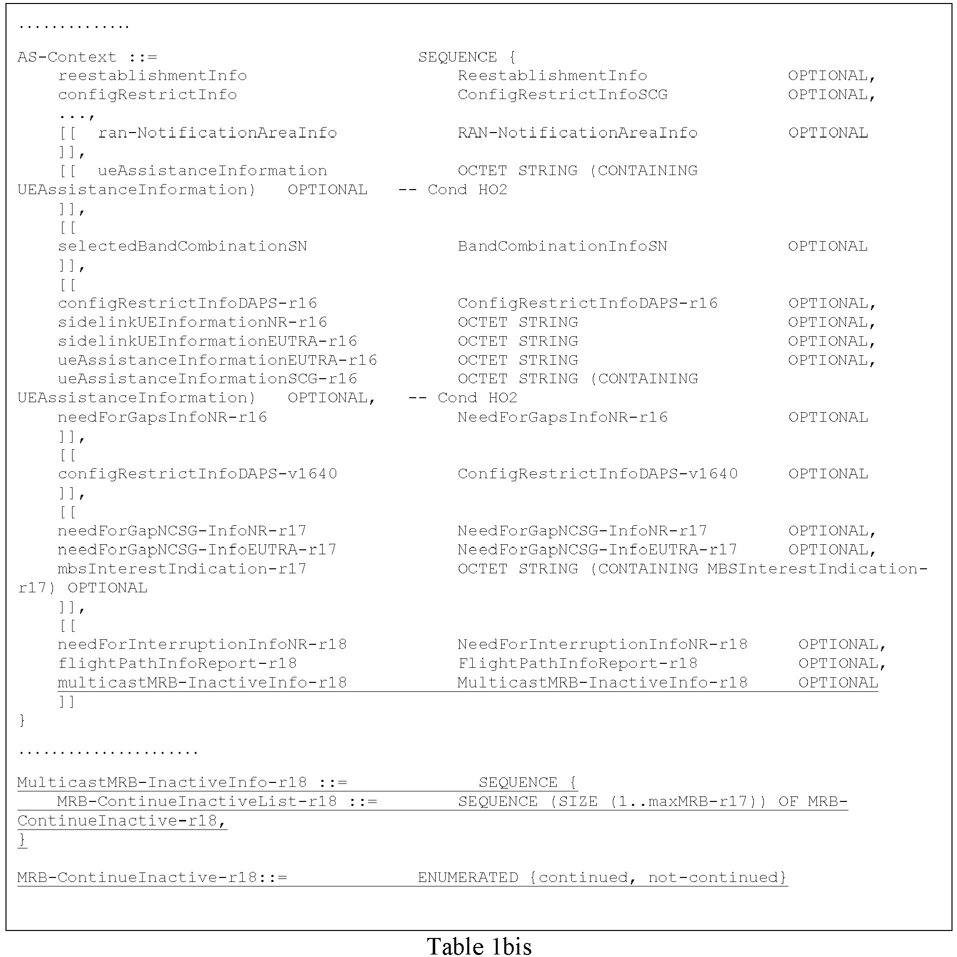

The field MRB-ContinueInactive may in this example be included by the source gNB and indicates 'continue' when same LCID as in RRC_CONNECTED mode as well as pdcpSync were configured for the multicast MRB in RRC_INACTIVE mode (i.e., if the multicast MRB was continued by the UE when going from RRC_CONNECTED to RRC_INACTIVE and when reselecting to another cell within the RNA); otherwise it would indicate not-continued. This new field may be never sent to a UE and may only be used in HandoverPreparationInformation message. While the proposed new field may not be a part of the UE connected mode configuration, it can still be stored by the last serving base station, i.e., source base station, as part of the UE Inactive AS context.

In another example, when the continuity information is comprised by the MBS session information element, this MBS session information element may be an MBS Session Information List information element based on the definition in 3GPP TS 38.423 Release 17/18 directly included in the RETRIEVE UE CONTEXT RESPONSE message. The MBS Session Information List information element may then include a new indicator (e.g., MRBContinuityInformation or ContinuePDCPInactive), which is added at MBS session level. In this case, the indicator for the continuity information indicates that all multicast MRBs associated with an MBS session are handled in the same way, i.e., either continued in inactive mode or not continued in the inactive mode. However, in an embodiment if not all multicast MRBs of a given MBS multicast session are continued in RRC_INACTIVE, e.g. a subset of the multicast MRBs is not continued in the RRC _INACTIVE, then the MBS session shall be indicated as `not continued' since it is more harmful not to reestablish PDCP entity of a multicast MRB that was not continued in RRC _INACTIVE than to reestablish PDCP entity of a multicast MRB that was continued in RRC _INACTIVE. In other words, if at least one multicast MRB of an MBS session is not continued, then the whole MBS session has to be indicated as not continued. Alternatively, a list of MRB identifiers is added for each MBS session and the new indicator (e.g., MRBContinuityInformation or ContinuePDCPInactive) is added at MRB level. This allows differentiated treatment per MRB. A possible definition of the MBS Session Information List information element for the latter case is shown in the following Table 2.

**Table 2**

| **IE/Group Name** | | **Pres-ence** | **Range** | **IE type and reference** | **Semantics description** | **Criticality** | **Assigned Criticality** |
|---|---|---|---|---|---|---|---|
| MBS Session Information Item | | | *1..*<*maxnoof MBSSessions*> | | | - | |
| | >MBS Session ID | M | | 9.2.3.146 | | - | |
| | >MBS Area Session ID | O | | 9.2.3.148 | MB S Area Session ID of the UE at the NG-RAN node from which the UE context is transferred | - | |
| | >Active MBS Session Information | O | | | | - | |
| | >>MBS QoS Flows to Add List | | *1..*<*maxnoof MBSQoSFlows* > | | | - | |
| | >>MBS QoS Flow Identifier | M | | QoS Flow Identifier 9.2.3.10 | | - | |
| | >>>MBS QoS Flow Level QoS *Parameters* | M | | QoS Flow Level QoS Parameter s 9.2.3.5 | | - | |
| | >>MBS Service Area | O | | 9.2.3.150 | | - | |
| | >>MBS Mapping and Data Forwarding Request Info from source NG-RAN node | O | | 9.2.1.39 | | - | |
| | >MBS Assistance Information | O | | 9.2.3.196 | | YES | ignore |
| | >MRB Information List | O | | | | - | |
| | >>MRB Information Item | | *1..*<*maxnoof MRBs*> | | | - | |
| | >>>MRB ID | M | | 9.2.3.145 | | - | |
| | >>>Contin ue PDCP Inactive | M | | ENUMER ATED (yes, no, ...) | | - | |

As is apparent, the target gNB is made aware by the source gNB of the status of each multicast MRB and can consequently act accordingly, i.e., reestablish the PDCP of only those multicast MRBs that require it. Alternatively, the continuity information may be received from the user equipment over an air interface. The continuity information may in some examples be received within or together with the request for transition from RRC_INACTIVE mode to RRC_CONNECTED mode, e.g., with an RRCResumeRequest message similar to that defined in 3GPP TS 38.331 Release 17/18.

The continuity information may then be received via a message after reception of the request for transition from RRC_INACTIVE mode to RRC _CONNECTED mode and before transmission of the message for transition from RRC_INACTIVE mode to RRC_CONNECTED mode, e.g., an RRCResume message similar to that defined in 3GPP TS 38.331 Release 17/18. In this case, a new message may be required to be defined.

The new message may be protected by the UE since UE activates the security before sending the RRCResumeRequest. The new message may indicate for each restored multicast MRB whether the respective PDCP state variables are up-to-date or not, or in other words whether the multicast MRB has been continued in inactive mode (during state transition or during cell reselection). The new message may be a new RRC message or a reuse of an existing RRC message, e.g., UE assistance information, or may be enhancement to the existing RRC message. As an alternative option, the continuity information can be a medium access control (MAC) control element (MAC CE) but that would not be protected. Sending an RRC message after RRCResumeRequest but before RRCResume may be enabled by the use of small data transmission (SDT) or with other similar changes to standard specifications. Since the UE anyway activates the security before sending RRCResumeRequest and resumes signal radio bearer 1 (SRB1). Thus, in some embodiments, an indication of a transmission of the RRC message for the continuity information is received from the UE together with the request for transition from RRC_INACTIVE mode to RRC_CONNECTED mode. For example, the RRCResumeRequest indicates that UE has another RRC message to send or that can be indicated , e.g., by including a buffer status report (BSR) in the transmission.

Since the continuity information includes information whether or not a multicast MRB was continued in RRC _INACTIVE mode, the method proceeds differently depending on the continuity information (shown with diamond 403 and the no- and yes-branches). In response to the continuity information indicating that the multicast MRB was not continued in the RRC_INACTIVE mode (no-branch leading to box 404), the target base station requests the user equipment, in a message for transition from RRC_INACTIVE mode to RRC_CONNECTED mode, to reestablish a packet data convergence protocol, PDCP, entity and to initialize PDCP state variables of the multicast MRB. The UE may then act according to the request, i.e., reestablish the PDCP entity and initialize the PDCP state variables for the multicast MRB.

Optionally (shown in dashed lines), in response to the continuity information indicating that the multicast MRB was continued in the RRC _INACTIVE mode (yes-branch leading to box 405), the target base station may allow the user equipment to continue application of a PDCP entity without reestablishment of the PDCP entity and initialization of the PDCP state variables for the multicast MRB after transition from RRC _INACTIVE mode to RRC_CONNECTED mode. Allowing the UE to continue application may be achieved by not sending any reestablishing request for a multicast MRB that was continued. Hence, according to the information the UE receives in the message for transition from RRC_INACTIVE mode to RRC _CONNECTED mode, e.g., in the RRCResume message, it will know which multicast MRBs are to be continued and for which a reestablishment of the PDCP entity and an initialization of the state variables is required.

FIG. 5 presents a flow chart of a method performed by a source base station of multicast MBS radio bearer handling with continuity information being provided according to an embodiment, i.e., presents an embodiment of the methods described with respect to FIG. 4 from the source base station's view. Multicast MBS radio bearer, MRB, handling is performed after cell reselection of a user equipment coming from the source base station and selecting a target base station. The user equipment was previously released from a radio resource control connected, RRC_CONNECTED mode to a radio resource control inactive, RRC_INACTIVE, mode by the source base station.

The source base station receives a user equipment contest request from the target base station in box 501 and transmits continuity information to the target base station in box 502, wherein the continuity information indicates whether or not a multicast MRB was continued to be received by the UE in the RRC _INACTIVE mode.

As was explained above, the continuity information may be received from the source base station via a user equipment context message over an Xn interface. The UE context message may, e.g., be a RETRIEVE UE CONTEXT RESPONSE message similar to that defined in 3GPP TS 38.423 Release 17/18, and may be sent in response to a RETRIEVE UE CONTEXT REQUEST message from the target base station similar to that defined in 3GPP TS 38.423 Release 17/18. The continuity information may be comprised in an RRC context information element or in a multicast broadcast service, MBS, session information element of the user equipment context message. The MBS session information element includes the continuity information at MBS session level or MRB level.

The examples given above consequently also apply for the source base station and the methods performed therein. Hence, the continuity information may equally be implemented as described above, in particular, as shown in Tables 1 and 2. When the source base station provides the continuity information to the target base station, no changes are required to be made at the user equipment side compared to what was already defined in Release 17/18 of the 5G standards.

FIG. 6 presents a flow chart of a method performed by a UE of multicast MBS radio bearer handling with continuity information being provided according to an embodiment. Multicast MBS radio bearer, MRB, handling is performed after cell reselection of the user equipment originally coming from a source base station and selecting a target base station, potentially with one more cell reselections in between. The user equipment was previously released from a radio resource control connected, RRC_CONNECTED mode to a radio resource control inactive, RRC _INACTIVE, mode by the source base station.

The method starts with transmitting, from the UE, a request for transition from RRC_INACTIVE mode to RRC_CONNECTED mode to the target base station in box 601. The method then proceeds differently for MRBs that were continued (with same LCID as described above) in RRC _INACTIVE and for those that were not continued in RRC _INACTIVE. This is shown with diamond 602 and the no- and yes-branches.

In response to that reception of a multicast MRB was not continued in the RRC_INACTIVE mode (no-branch leading to box 603), the UE receives, in a message for transition from RRC_INACTIVE mode to RRC_CONNECTED mode, a request to reestablish a packet data convergence protocol, PDCP, entity and to initialize PDCP state variables of the multicast MRB from the target base station. The UE then consequently (box 604) reestablishes the packet data convergence protocol, PDCP, entity and initializes the PDCP state variables of the multicast MRB when transitioning from RRC_INACTIVE mode to RRC_CONNECTED mode. In an embodiment where the UE transmits the continuity information to the target base station and the continuity information indicates that the multicast MRB was not continued in the RRC_INACTIVE mode, the request may be based on the continuity information and this indication.

Optionally (shown in dashed lines), in response to that reception of a multicast MRB was continued in the RRC _INACTIVE mode (yes-branch leading to box 605), the UE may continue application of a PDCP entity without reestablishment and PDCP state variables without initialization for the multicast MRB when transitioning from RRC_INACTIVE mode to RRC _CONNECTED mode. In an embodiment where the UE transmits the continuity information to the target base station and the continuity information indicates that the multicast MRB was continued in the RRC _INACTIVE mode, the continuation may be based on the continuity information and this indication, e.g. the target base station may decide not to request for the PDCP reestablishment and initialization of the PDCP state variables.

In other words, the UE is informed (box 603) about the multicast MRBs, for which the PDCP entity is to be reestablished and the state variables are to be initialized, which are - usually - the ones that were not continued in RRC_INACTIVE. It is noted that it would also be possible for the target base station that not only the multicast MRBs, which were not continued, but also some continued MRBs are to be reconfigured, i.e., the respective PDCP entity is reestablished and the PDCP state variables are initialized. Hence, the diamond 602 is not to be interpreted to be a decision of the UE but a general condition, which is usually applied on the target base station side, which has been informed about the state of the multicast MRBs (in continuity information) by the source base station or the user equipment.

Therefore, in some examples, the UE may also transmit the continuity information to the target base station. The continuity information may be transmitted from the user equipment over an air interface. The continuity information may in some examples be received within the request for transition from RRC _INACTIVE mode to RRC_CONNECTED mode, e.g., with an RRCResumeRequest message similar to that defined in 3GPP TS 38.331 Release 17/18. The continuity information may then be received via a message after reception of the request for transition from RRC _INACTIVE mode to RRC _CONNECTED mode and before transmission of the message for transition from RRC_INACTIVE mode to RRC _CONNECTED mode, e.g., an RRCResume message similar as defined in 3GPP TS 38.331 Release 17/18. In this case, a new message may be required to be defined as explained above with respect to FIG. 4. Hence, the examples given above consequently also apply on the UE side and the methods performed therein.

Embodiments of Figures 4 and 6 may be performed per MRB. The UE may continue reception of a first multicast service during the RRC _INACTIVE mode while discontinue reception of a second multicast service during the RRC _INACTIVE mode. As a consequence, the procedure for the first multicast service may follow steps from 403 to 405 and from 602 to 605, while the procedure for the second multicast service may follow steps from 403 to 404 and from 602 to 603, 604.

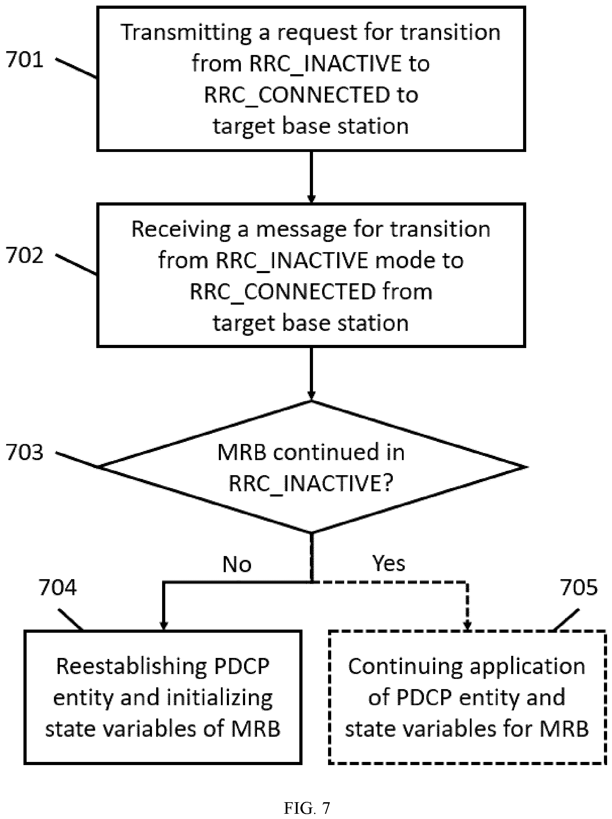

FIGs 4 to 6 have shown examples with continuity information being provided to a target base station. FIG. 7 presents a flow chart of a method performed by a UE of multicast MBS radio bearer handling without continuity information being provided according to an embodiment. Multicast MBS radio bearer, MRB, handling is performed after cell reselection of the user equipment coming from a source base station and selecting a target base station. The user equipment was previously released from a radio resource control connected, RRC _CONNECTED mode to a radio resource control inactive, RRC _INACTIVE, mode by the source base station.

In this example, the method starts in box 701 with transmitting a request for transition from RRC_INACTIVE mode to RRC_CONNECTED mode from the UE to the target base station, e.g., an RRCResumeRequest as defined in 3GPP TS 38.331 Release 17 or later. The method performed by the UE proceeds in box 702 with receiving a message for transition from RRC _INACTIVE mode to RRC _CONNECTED mode from the target base station, e.g., an RRCResume as defined in 3GPP TS 38.331 Release 17 or later. This message does not contain any requests to the UE according to continuity information as in the examples above. The UE itself determines whether a multicast MRB was continued in RRC _INACTIVE (i.e., with same LCID in RNA as explained above), which is depicted in diamond 703. In response to that reception of a multicast MRB was not continued in the RRC_INACTIVE mode (no-branch leading to box 704), the UE reestablishes a packet data convergence protocol, PDCP, entity and initializes PDCP state variables of the multicast MRB. The UE may perform the reestablishment autonomously, i.e. without a specific instruction from the target base station.

Optionally (shown in dashed lines), in response to that reception of a multicast MRB was continued in the RRC_INACTIVE mode (yes-branch leading to box 705), the method may proceed with continuing application of PDCP entity without reestablishment of the PDCP entity and initialization of the PDCP state variables for the multicast MRB after transition from RRC_INACTIVE mode to RRC_CONNECTED mode.

Alternatively, the UE may receive the request to reestablish the PDCP entity and to initialize the PDCP state variables in step 702. The UE itself determines whether a multicast MRB was continued in RRC_INACTIVE (i.e., with same LCID in RNA as explained above), which is depicted in diamond 703. In response to that determination that reception of a multicast MRB was not continued in the RRC _INACTIVE mode (no-branch leading to box 704), the UE reestablishes a packet data convergence protocol, PDCP, entity and initializes PDCP state variables of the multicast MRB and thus follows what was requested by the target base station. However, if the UE determines that the multicast MRB was continued in RRC _INACTIVE, UE would still reestablish the PDCP entity of that multicast MRB but within the reestablishment procedure would not initialize the PDCP state variables. Thus, the UE would always follow the PDCP reestablishment request but, based on the determination, either initialize the PDCP state variables or skip the initialization.

Since the target base station is not aware of any continuity information in this case, the UE may finally transmit (not shown in FIG. 7) a message for completion of transition from RRC_INACTIVE mode to RRC_CONNECTED to the target base station that includes such information. This message may in some examples be similar to an RRCResumeComplete message as defined in 3GPP TS 38.331 Release 17/18 but comprises an indication which multicast MRBs were not initialized but continued.

The example of FIG. 7 may require some changes in mobile communication standards that define the behavior of the UE for PDCP entity reestablishment. For example, an amendment for the respective 3GPP 5G clauses may be similar to what is shown in Table 3 (based on 3GPP TS 38.323 Release 17).

**Table 3**

| **PDCP entity re-establishment** | |
|---|---|
| When upper layers request a PDCP entity re-establishment, the UE shall additionally perform once the procedures described in this clause for Uu or PC5 interface. After performing the procedures in this clause, the UE shall follow the procedures in clause 5.2. | |
| ...... | |
| | - for SRBs and UM DRBs, set RX_NEXT and RX_DELIV to the initial value; |
| | - for UM MRBs and AM MRBs, set RX_NEXT and RX_DELIV to the initial value if *initialRX-DELIV* is configured in TS 38.331 [3] unless the reestablishment was requested in RRCResume and the multicast MRB has been continued in RRC_INACTIVE: |

It is apparent that this example does not require any changes on the network side but only a change of the behavior on the UE side. The network is only informed after initializing MRBs at the UE side which MRBs were not initialized but continued. This may be done with similar data structures/information elements as described above for indicating continuity information.

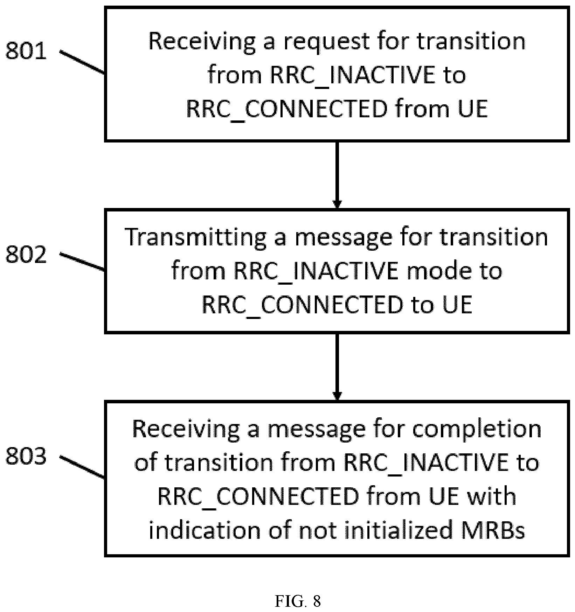

FIG. 8 presents a flow chart of a method performed by a target base station of multicast MBS radio bearer handling without continuity information being provided according to an embodiment. Multicast MBS radio bearer, MRB, handling is performed after cell reselection of the user equipment coming from a source base station and selecting a target base station. The user equipment was previously released from a radio resource control connected, RRC_CONNECTED mode to a radio resource control inactive, RRC_INACTIVE, mode by the source base station.

The method starts in box 801 with receiving a request for transition from RRC _INACTIVE mode to RRC _CONNECTED mode from the user equipment. The method proceeds in box 802 with transmitting a message for transition from RRC _INACTIVE mode to RRC_CONNECTED mode to the user equipment. These messages may be the RRCResumeRequest and RRCResume messages as explained above. The target base station is in this example not aware of any continuity information of MRBs. Hence, the messages of boxes 801 and 802 may the similar as currently defined in the mobile communications for resuming the RRC connection. Hence, the RRCResume message may indicate to the UE to reestablish PDCP entities and PDCP state variables of all present multicast MRBs.

However, the UE does not reestablish PDCP entities and initialize PDCP state variables of all multicast MRBs but only those that were not continued. The other PDCP entities and state variables are kept. Alternatively, the UE may reestablish PDCP entities of all multicast MRBs but initialize the PDCP state variables of only those multicast MRBs that were not continued in RRC_INACTIVE. In order to inform the target base station, which MRBs have not been reinitialized, the method proceeds in box 803 with receiving, by the target base station, a message for completion of transition from RRC_INACTIVE mode to RRC_CONNECTED mode from the user equipment, wherein the message for completion of transition from RRC_INACTIVE mode to RRC_CONNECTED to the target base station comprises an indication which MRBs were not initialized but continued by the user equipment.

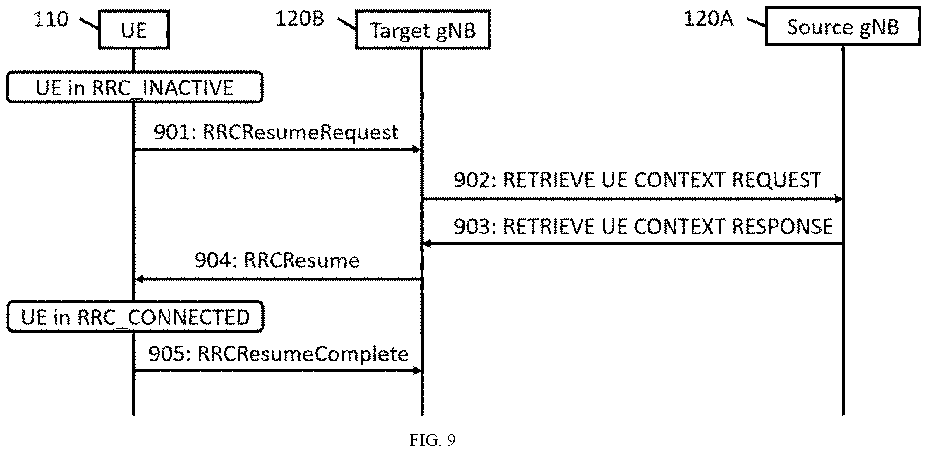

FIG. 9 shows a message signaling diagram of messages sent for transition from RRC_INACTIVE mode to RRC_CONNECTED mode. This diagram generally depicts the message flow in the process of transitioning from an inactive to an active state in wireless communication networks, e.g., in 5G according to Release 17/18. A UE, which may be the UE 110 as shown in FIG. 1, a source base station, which may be the radio access node 120A as shown in FIG. 1, and a target base station, which may be the radio access node 120B as shown in FIG. 1, are involved in the message flow.

The UE 110 was previously served by the source base station 120A and was released to RRC_INACTIVE state by the source base station 120A. The UE 110 is now in RRC_INACTIVE state but wants to change to RRC_CONNECTED in a new target base station 120B. Therefore, the UE 110 transmits (arrow 901) an RRCResumeRequest message to the target base station 120B. The target base station 120B then transmits over Xn interface (arrow 902) a RETRIEVE UE CONTEXT REQUEST message to the source base station 120A and receives (arrow 903) UE context information (e.g., UE configuration) in a RETRIEVE UE CONTEXT RESPONSE message from the source base station 120A.

The target base station 120B then transmits an RRCResume message to the UE 110 (arrow 904), which informs the UE 110 about the new configuration (as full configuration or delta configuration on top of the restored configuration of the UE 110). The RRCResume message may instruct the UE 110 to reestablish all MRBs. The UE 110 then transitions to RRC _CONNECTED state and confirms the transition with an RRCResumeComplete message (arrow 905).

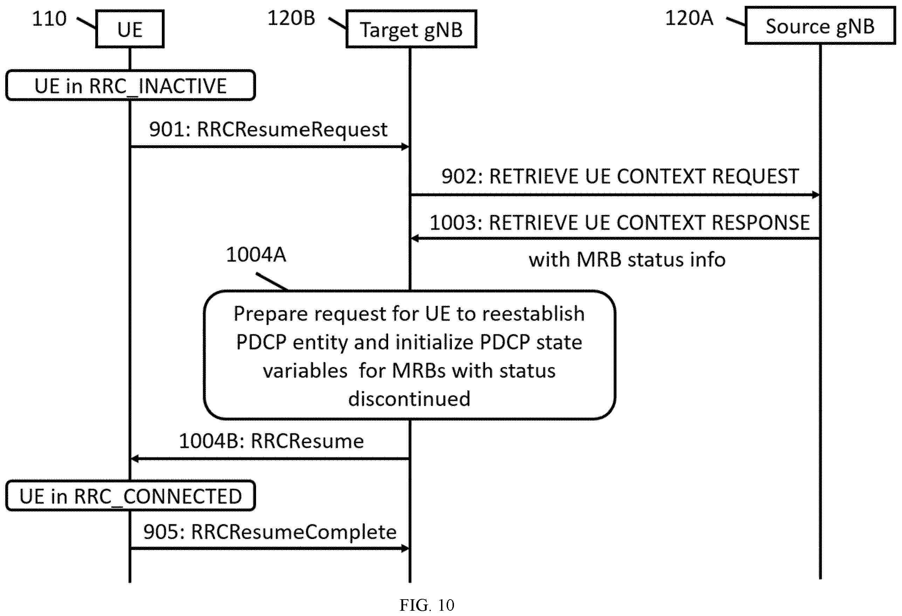

In the message flow of FIG. 9, the target base station 120B is not aware of any continuity information of MRBs, which requires the target base station 120B to instruct the UE 110 to reestablish and initialize all MRBs when transitioning from RRC_INACTIVE to RRC_CONNECTED. FIGs. 10 to 12 show message flow diagrams that improve the multicast MRB handling when transitioning from RRC_INACTIVE to RRC_CONNECTED in the new target base station 120B.

FIG. 10 shows a message signaling diagram of multicast MBS radio bearer handling with continuity information being provided from a source cell according to an embodiment. The UE 110 was previously served by the source base station 120A and is now in RRC _INACTIVE state but wants to change to RRC _CONNECTED in the target base station 120B. As in FIG. 9, the UE 110 transmits (arrow 901) an RRCResumeRequest message to the target base station 120B.

The target base station 120B then transmits over Xn interface (arrow 902) a RETRIEVE UE CONTEXT REQUEST message to the source base station 120A. In response to the RETRIEVE UE CONTEXT REQUEST message, the source base station 120A transmits (arrow 1003) UE context information in a RETRIEVE UE CONTEXT RESPONSE message. This message is different from the message 903 of FIG. 9 because it additionally comprises status information of the multicast MRBs of the UE 110, that is, continuity information according to the disclosure.

The RETRIEVE UE CONTEXT REQUEST message and the RETRIEVE UE CONTEXT RESPONSE message may be transmitted over the Xn interface. The status information of the one or more multicast MRBs configured for one or more MBS may be included in an RRC context information element or in an MBS session information element as explained above and shown in Tables 1 and 2. The MBS session information element may include the continuity information at MBS session level or MRB level.

Based on the status information, the target base station 120B can decide for which multicast MRBs the PDCP should be reestablished and the PDCP state variables should be initialized as has been explained above, e.g., with respect to FIG. 4. Hence, the target base station 120B prepares (box 1004A) a request for the UE 110 to reestablish PDCP entity and initialize PDCP state variables for multicast MRBs that have a status of discontinued. This request is included in the RRCResume message (arrow 1004B), which therefore differs from the RRCResume message as shown in arrow 904 of FIG. 9. The UE 110 then transitions to RRC_CONNECTED state and confirms the transition with the RRCResumeComplete message (arrow 905).

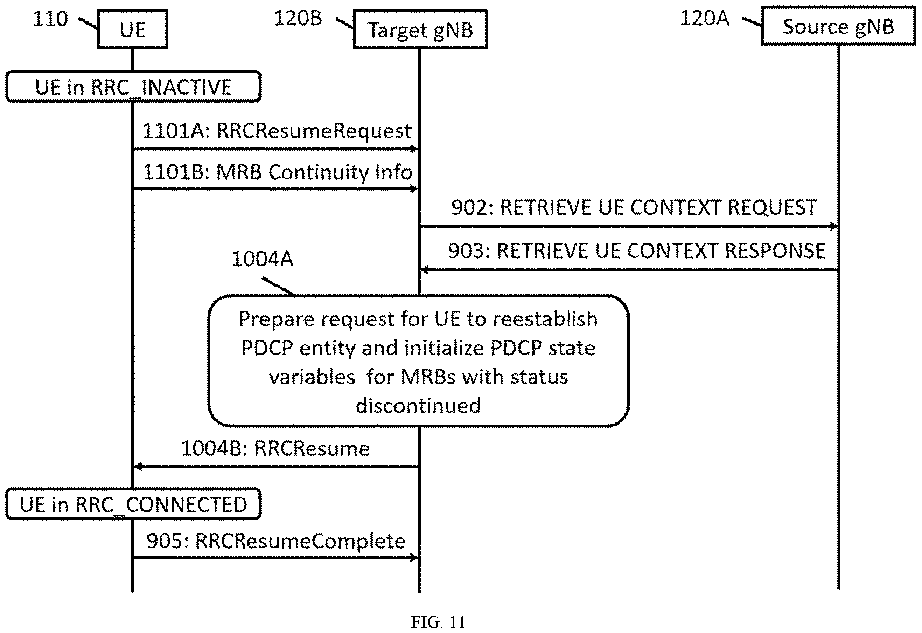

FIG. 11 shows a message signaling diagram of multicast MBS radio bearer handling with continuity information being provided from the UE according to an embodiment. The UE 110 was previously served by the source base station 120A and is now in RRC_INACTIVE state but wants to change to RRC_CONNECTED in the target base station 120B. As in FIG. 9, the UE 110 transmits (arrow 1101A) an RRCResumeRequest message to the target base station 120B.

Additionally, the UE 110 transmits (arrow 1101B) continuity information of the multicast MRBs to the target base station 120B. The message 1101B may be protected by the UE 110 as explained before and may indicate for each multicast MRB whether its PDCP state variables are up-to-date or not, or in other words whether the multicast MRB has been continued in RRC_INACTIVE mode. Variants of this additional new message 1101B have been explained with respect to FIG. 4. Moreover, although message 1101A may be identical to that of FIG. 9, the message 1101A in the example of FIG. 11 may also further comprise an indication that the message 1101B is to be transmitted afterwards from the UE 110. Furthermore, messages 1101A and 1101B may be transmitted together in the same transmission if the UL grant received by the UE is large enough.

The target base station 120B then transmits (arrow 902) a RETRIEVE UE CONTEXT REQUEST message to the source base station 120A and receives (arrow 903) UE context information (e.g., UE configuration) in a RETRIEVE UE CONTEXT RESPONSE message from the source base station 120A as also described with respect to FIG. 9.

Based on the continuity information received from the UE 110, the target base station 120B can decide for which multicast MRBs the PDCP should be reestablished and the PDCP state variables should be initialized as has been explained above, e.g., with respect to FIG. 4. Hence, the target base station 120B prepares (box 1004A) a request for the UE 110 to reestablish PDCP entity and initialize PDCP state variables for MRBs that have a status of discontinued. This request is included in the RRCResume message (arrow 1004B), which therefore differs from the RRCResume message as shown in arrow 904 of FIG. 9. As apparent, the process of 1004A and the message of 1004B are similar to that of FIG. 10.

It is noted that the message 1101B may not only be sent before the message 902 but also at any time before the message 1004B. The UE 110 finally transitions to RRC _CONNECTED state and confirms the transition with the RRCResumeComplete message (arrow 905).

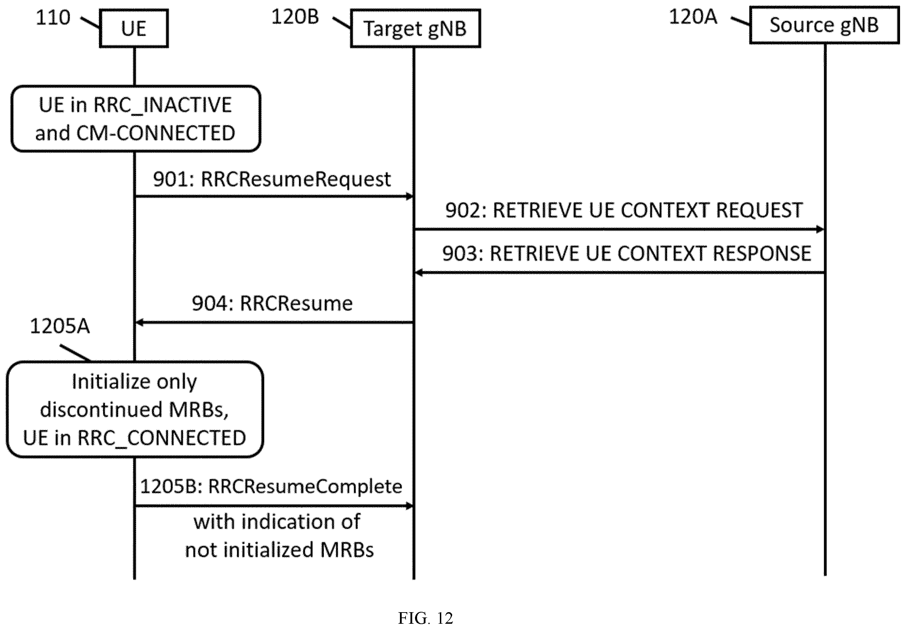

FIG. 12 shows a message signaling diagram of multicast MBS radio bearer handling without continuity information being provided according to an embodiment. The UE 110 was previously served by the source base station 120A and is now in RRC_INACTIVE state but wants to change to RRC_CONNECTED in the target base station 120B.

As in FIG. 9, the UE 110 transmits (arrow 901) an RRCResumeRequest message to the target base station 120B. The target base station 120B then transmits (arrow 902) a RETRIEVE UE CONTEXT REQUEST message to the source base station 120A and receives (arrow 903) UE context information (e.g., UE configuration) in a RETRIEVE UE CONTEXT RESPONSE message from the source base station 120A.

The target base station 120B then transmits an RRCResume message to the UE 110 (arrow 904), which informs the UE 110 about the new configuration (as full configuration or delta configuration on top of the restored configuration of the UE 110). The RRCResume message may instruct the UE 110 to reestablish PDCP entity of all multicast MRBs and initialize PDCP state variables of all multicast MRBs.

Since reestablishing and especially initializing the PDCP state variables of all multicast MRBs is introducing delays in the MBS data reception, the UE 110 may initialize only PDCP state variables of discontinued MRBs (box 1205A) and then transitions to RRC _CONNECTED state. The UE confirms the transition with an RRCResumeComplete message (arrow 1205B) and optionally also includes an indication of MRBs with not initialized PDCPS state variables, i.e., those that were continued. Alternatively, the UE 110 could not even reestablish the PDCP entities for MRBs that have been continued in RRC _INACTIVE, even if RRC requests reestablishment.

The following clauses represent examples of methods and apparatuses as described herein, in particular, with respect to FIGs. 4, 5, 6, 10, 11, and 12.

Clause 1 related to a method of multicast Multicast Broadcast Service, MBS, Radio Bearer, MRB, handling performed by a target base station after cell reselection of a user equipment, UE, to a cell of the target base station, wherein the UE was released from a Radio Resource Control, RRC, connected, RRC_CONNECTED,mode to an RRC inactive, RRC_INACTIVE, mode by a source base station, comprising receiving a request for transition from RRC_INACTIVE mode to RRC _CONNECTED mode from the UE, receiving continuity information, wherein the continuity information indicates whether or not at least one multicast MRB of an MBS session was not continued to be received by the UE in the RRC_INACTIVE mode, and in response to the continuity information indicating that the at least one multicast MRB of the MBS session was not continued in the RRC_INACTIVE mode, requesting the UE, in a message for transition from RRC_INACTIVE mode to RRC_CONNECTED mode, to reestablish a packet data convergence protocol, PDCP, entity and to initialize PDCP state variables for the at least one multicast MRB of the MBS session.

Clause 2 relates to the method of clause 1 further comprising in response to the continuity information indicating that the at least one multicast MRB was continued in the RRC_INACTIVE mode, allowing the UE to continue application of a PDCP entity without reestablishment of the PDCP entity and initialization of the PDCP state variables for the at least one multicast MRB of the MBS session after transition from RRC_INACTIVE mode to RRC_CONNECTED mode.

Clause 3 relates to the method of clause 1 or clause 2, wherein the continuity information is received from the source base station within a UE context transferred in an Xn Application Protocol, XnAP, UE associated message over an Xn interface.

Clause 4 relates to the method of clause 3, wherein the continuity information is comprised within an RRC context information element or in MBS session information element included in the XnAP UE associated message.

Clause 5 relates to the method of clause 4, wherein the MBS session information element includes the continuity information at MBS session level or MRB level.

Clause 6 relates to the method of clause 1 or clause 2, wherein the continuity information is received from the UE over an air interface.

Clause 7 relates to the method of clause 6, wherein the continuity information is received together with the request for transition from RRC _INACTIVE mode to RRC_CONNECTED mode.

Clause 8 relates to the method of clause 6, wherein the continuity information is received within a message after reception of the request for transition from RRC_INACTIVE mode to RRC_CONNECTED mode and before transmission of the message triggering the transition from RRC_INACTIVE mode to RRC_CONNECTED mode.

Clause 9 relates to the method of any one of clauses 6 to 8, wherein the continuity information is included in an RRC message or as a medium access control, MAC, control element.

Clause 10 relates to the method of clause 9, wherein an indication of a transmission of the RRC message for the continuity information is received from the UE together with the request for transition from RRC_INACTIVE mode to RRC_CONNECTED mode.

Clause 11 relates to the method of clause 9 or clause 10, wherein the transmission of the RRC message for the continuity information is enabled by small data transmission, SDT, procedures.

Clause 12 relates to a method of multicast Multicast Broadcast Service, MBS, Radio Bearer, MRB, handling performed by a source base station after cell reselection of a user equipment, UE, to a cell of a target base station, wherein the UE was released from a Radio Resource Control, RRC, connected, RRC_CONNECTED, mode to an RRC inactive, RRC_INACTIVE, mode by the source base station, comprising receiving a UE context retrieval request from the target base station, and transmitting continuity information to the target base station, wherein the continuity information indicates whether or not at least one multicast MRB of an MBS session was continued to be received by the UE in the RRC_INACTIVE mode.

Clause 13 relates to the method of clause 12, wherein the continuity information is transmitted from the source base station within a UE context transferred in an Xn Application Protocol, XnAP, UE associated message over an Xn interface.

Clause 14 relates to the method of clause 13, wherein the continuity information is comprised within an RRC context information element or in MBS session information element included in the XnAP UE associated message.

Clause 15 relates to the method of clause 14, wherein the MBS session information element includes the continuity information at MBS session level or MRB level.

Clause 16 relates to a method of multicast Multicast Broadcast Service, MBS, Radio Bearer, MRB, handling performed by a user equipment, UE, after cell reselection to a cell of a target base station, wherein the UE was released from a Radio Resource Control, RRC, connected, RRC_CONNECTED,mode to an RRC inactive, RRC_INACTIVE, mode by a source base station, comprising transmitting a request for transition from RRC_INACTIVE mode to RRC_CONNECTED mode to the target base station, and when reception of at least one multicast MRB of an MBS session was not continued in the RRC_INACTIVE mode, receiving, in a message for transition from RRC_INACTIVE mode to RRC_CONNECTED mode, a request to reestablish a packet data convergence protocol, PDCP, entity and to initialize PDCP state variables of the at least one multicast MRB of the MBS session from the target base station and reestablishing the packet data convergence protocol, PDCP, entity and initializing the PDCP state variables of the at least one multicast MRB of the MBS session when transitioning from RRC_INACTIVE mode to RRC_CONNECTED mode.

Clause 17 relates to the method of clause 16 further comprising when reception of at least one multicast MRB of the MBS was continued in the RRC_INACTIVE mode, continuing application of a PDCP entity without reestablishment and PDCP state variables without initialization for the at least one MRB of the MBS session when transitioning from RRC_INACTIVE mode to RRC_CONNECTED mode.

Clause 18 relates to the method of clause 16 or clause 17 further comprising transmitting to the target base station over an air interface, continuity information on whether or not the at least one multicast MRB of an MBS session was continued in the RRC_INACTIVE mode.

Clause 19 relates to the method of clause 18, wherein the continuity information is transmitted together with the request for transition from RRC_INACTIVE mode to RRC_CONNECTED mode.

Clause 20 relates to the method of clause 18 or clause 19, wherein the continuity information is transmitted within a message after reception of the request for transition from RRC_INACTIVE mode to RRC_CONNECTED mode and before transmission of the message triggering the transition from RRC_INACTIVE mode to RRC_CONNECTED mode.

Clause 21 relates to the method of any one of clauses 18 to 20, wherein the continuity information is included in an RRC message or as a medium access control, MAC, control element.

Clause 22 relates to the method of clause 21, wherein an indication of a transmission of the RRC message for the continuity information is transmitted from the UE together with the request for transition from RRC _INACTIVE mode to RRC _CONNECTED mode.

Clause 23 relates to the method of clause 21 or clause 22, wherein the transmission of the RRC message for the continuity information is enabled by small data transmission, SDT, procedures.

Clause 24 relates to an apparatus of a target base station for providing multicast Multicast Broadcast Service, MBS, Radio Bearer, MRB, handling after cell reselection of a user equipment, UE, to a cell of the target base station, wherein the UE was released from a Radio Resource Control, RRC, connected, RRC_CONNECTED,mode to an RRC inactive, RRC_INACTIVE, mode by a source base station, configured to receive a request for transition from RRC_INACTIVE mode to RRC_CONNECTED mode from the UE, receive continuity information, wherein the continuity information indicates whether or not at least one multicast MRB of an MBS session was continued to be received by the UE in the RRC_INACTIVE mode, and in response to the continuity information indicating that the at least one multicast MRB of the MBS session was not continued in the RRC_INACTIVE mode, request the UE, in a message for transition from RRC_INACTIVE mode to RRC_CONNECTED mode, to reestablish a packet data convergence protocol, PDCP, entity and to initialize PDCP state variables for the at least one multicast MRB of the MBS session.

Clause 25 relates to the apparatus of clause 24 further being configured to in response to the continuity information indicating that the at least one multicast MRB was continued in the RRC_INACTIVE mode, allow the UE to continue application of a PDCP entity without reestablishment of the PDCP entity and initialization of the PDCP state variables for the at least one multicast MRB of the MBS session after transition from RRC_INACTIVE mode to RRC_CONNECTED mode.

Clause 26 relates to the apparatus of clause 24 or clause 25, wherein the continuity information is received from the source base station within a UE context transferred in an Xn Application Protocol, XnAP, UE associated message over an Xn interface.

Clause 27 relates to the apparatus of clause 26, wherein the continuity information is comprised within an RRC UE context information element or in MBS session information element included in the XnAP UE associated message.

Clause 28 relates to the apparatus of clause 27, wherein the MBS session information element includes the continuity information at MBS session level or MRB level.

Clause 29 relates to the apparatus of clause 24 or clause 25, wherein the continuity information is received from the UE over an air interface.

Clause 30 relates to the apparatus of clause 29, wherein the continuity information is received together with the request for transition from RRC _INACTIVE mode to RRC_CONNECTED mode.

Clause 31 relates to the apparatus of clause 29, wherein the continuity information is received within a message after reception of the request for transition from RRC_INACTIVE mode to RRC_CONNECTED mode and before transmission of the message triggering the transition from RRC_INACTIVE mode to RRC_CONNECTED mode.

Clause 32 relates to the apparatus of any one of clauses 29 to 31, wherein the continuity information is included in an RRC message or as a medium access control, MAC, control element.

Clause 33 relates to the apparatus of clause 32, wherein an indication of a transmission of the RRC message for the continuity information is received from the UE together with the request for transition from RRC_INACTIVE mode to RRC_CONNECTED mode.

Clause 34 relates to the apparatus of clause 32 or clause 33, wherein the transmission of the RRC message for the continuity information is enabled by small data transmission, SDT, procedures.

Clause 35 relates to an apparatus of a source base station for providing multicast Multicast Broadcast Service, MBS, Radio Bearer, MRB, handling after cell reselection of a user equipment, UE, to a cell of a target base station, wherein the UE was released from a Radio Resource Control, RRC, connected, RRC_CONNECTED, mode to an RRC inactive, RRC_INACTIVE, mode by the source base station, configured to receive a UE context retrieval request from the target base station, and transmit continuity information to the target base station, wherein the continuity information indicates whether or not at least one multicast MRB of an MBS session was continued to be received by the UE in the RRC_INACTIVE mode.

Clause 36 relates to the apparatus of clause 35, wherein the continuity information is transmitted from the source base station within a UE context transferred in an Xn Application Protocol, XnAP, UE associated message over an Xn interface.

Clause 37 relates to the apparatus of clause 36, wherein the continuity information is comprised within an RRC UE context information element or in MBS session information element included in the XnAP UE associated message.

Clause 38 relates to the apparatus of clause 37, wherein the MBS session information element includes the continuity information at MBS session level or MRB level.

Clause 39 relates to an apparatus of a user equipment, UE, for providing multicast Multicast Broadcast Service, MBS, Radio Bearer, MRB, handling after cell reselection to a cell of a target base station, wherein the UE was released from a Radio Resource Control, RRC, connected, RRC_CONNECTED, mode to an RRC inactive, RRC_INACTIVE, mode by a source base station, configured to transmit a request for transition from RRC_INACTIVE mode to RRC_CONNECTED mode to the target base station, and when reception of at least one multicast MRB of an MBS session was not continued in the RRC_INACTIVE mode, receive, in a message for transition from RRC_INACTIVE mode to RRC_CONNECTED mode, a request to reestablish a packet data convergence protocol, PDCP, entity and to initialize PDCP state variables of the at least one multicast MRB of the MBS session from the target base station and reestablish the packet data convergence protocol, PDCP, entity and initialize the PDCP state variables of the at least one multicast MRB of the MBS session when transitioning from RRC_INACTIVE mode to RRC_CONNECTED mode.

Clause 40 relates to the apparatus of clause 39 further being configured to when reception of at least one multicast MRB of the MBS was continued in the RRC_INACTIVE mode, continue application of a PDCP entity without reestablishment and PDCP state variables without initialization for the at least one MRB of the MBS session when transitioning from RRC_INACTIVE mode to RRC_CONNECTED mod

Clause 41 relates to the apparatus of clause 39 or clause 40 further being configured to transmit to the target base station over an air interface, continuity information on whether or not the at least one multicast MRB of an MBS session was continued in the RRC_INACTIVE mode.

Clause 42 relates to the apparatus of clause 41, wherein the continuity information is transmitted together with the request for transition from RRC_INACTIVE mode to RRC_CONNECTED mode.

Clause 43 relates to the apparatus of clause 41 or clause 42, wherein the continuity information is transmitted within a message after reception of the request for transition from RRC_INACTIVE mode to RRC _CONNECTED mode and before transmission of the message triggering the transition from RRC _INACTIVE mode to RRC _CONNECTED mode.

Clause 44 relates to the apparatus of any one of clauses 41 to 43, wherein the continuity information is included in an RRC message or as a medium access control, MAC, control element.

Clause 45 relates to the apparatus of clause 44, wherein an indication of a transmission of the RRC message for the continuity information is transmitted from the UE together with the request for transition from RRC _INACTIVE mode to RRC_CONNECTED mode.

Clause 46 relates to the apparatus of clause 44 or clause 45, wherein the transmission of the RRC message for the continuity information is enabled by small data transmission, SDT, procedures.

The following clauses represent examples of methods and apparatuses as described herein, in particular, with respect to FIGs. 7, 8, and 12.

Clause 1 relates to a method of multicast MBS radio bearer, MRB, handling performed by a user equipment after cell reselection to a target base station, wherein the user equipment was released from a radio resource control connected, RRC_CONNECTED mode to a radio resource control inactive, RRC _INACTIVE, mode by a source base station, comprising transmitting a request for transition from RRC _INACTIVE mode to RRC _CONNECTED mode to the target base station, receiving a message for transition from RRC _INACTIVE mode to RRC _CONNECTED mode from the target base station, in response to that reception of a multicast MRB was not continued in the RRC _INACTIVE mode, reestablishing a packet data convergence protocol, PDCP, entity and initializing PDCP state variables of the multicast MRB, and in response to that reception of a multicast MRB was continued in the RRC _INACTIVE mode, continuing application of PDCP entity without reestablishment of the PDCP entity and initialization of the PDCP state variables for the multicast MRB after transition from RRC_INACTIVE mode to RRC_CONNECTED mode.

Clause 1bis relates to a method of multicast MBS radio bearer, MRB, handling performed by a user equipment after cell reselection to a target base station, wherein the user equipment was released from a radio resource control connected, RRC _CONNECTED mode to a radio resource control inactive, RRC_INACTIVE, mode by a source base station, comprising transmitting a request for transition from RRC_INACTIVE mode to RRC _CONNECTED mode to the target base station, receiving a message for transition from RRC _INACTIVE mode to RRC _CONNECTED mode from the target base station, in response to that reception of a multicast MRB was not continued in the RRC _INACTIVE mode, initializing PDCP state variables of the multicast MRB, and in response to that reception of a multicast MRB was continued in the RRC _INACTIVE mode, continuing application of PDCP entity without initialization of the PDCP state variables for the multicast MRB after transition from RRC_INACTIVE mode to RRC_CONNECTED mode.

Clause 2bis relates to the method of clause 1bis further comprising reestablishing a packet data convergence protocol, PDCP, entity, if requested in the received message.

Clause 2 relates to the method of clause 1 or 1bis further comprising transmitting a message for completion of transition from RRC _INACTIVE mode to RRC _CONNECTED to the target base station, wherein the message for completion of transition from RRC_INACTIVE mode to RRC _CONNECTED mode to the target base station comprises an indication which MRBs were not initialized but continued.

Clause 3 relates to the method of any preceding clause, wherein the message for transition from RRC _INACTIVE mode to RRC _CONNECTED mode comprises a request to reestablish a packet data convergence protocol, PDCP, entity and to initialize PDCP state variables of all MRBs of the user equipment.

Clause 4 relates to a method of multicast MBS radio bearer, MRB, handling performed by a target base station after cell reselection of a user equipment from a source base station, wherein the user equipment was released from a radio resource control connected, RRC _CONNECTED mode to a radio resource control inactive, RRC_INACTIVE, mode by the source base station, comprising receiving a request for transition from RRC_INACTIVE mode to RRC_CONNECTED mode from the user equipment, transmitting a message for transition from RRC _INACTIVE mode to RRC _CONNECTED mode to the user equipment, and receiving a message for completion of transition from RRC _INACTIVE mode to RRC _CONNECTED mode from the user equipment, wherein the message for completion of transition from RRC_INACTIVE mode to RRC_CONNECTED to the target base station comprises an indication which MRBs were not initialized but continued by the user equipment.

Clause 5 relates to the method of clause 4, wherein the message for transition from RRC_INACTIVE mode to RRC _CONNECTED mode comprises a request to reestablish a packet data convergence protocol, PDCP, entity and to initialize PDCP state variables of all MRBs of the user equipment.

Clause 6 relates to an apparatus in a user equipment of multicast MBS radio bearer, MRB, handling after cell reselection from a source base station to a target base station, wherein the user equipment was released from a radio resource control connected, RRC_CONNECTED mode to a radio resource control inactive, RRC_INACTIVE, mode by the source base station, configured to transmit a request for transition from RRC _INACTIVE mode to RRC _CONNECTED mode to the target base station, receive a message for transition from RRC _INACTIVE mode to RRC _CONNECTED mode from the target base station, in response to that reception of a multicast MRB was not continued in the RRC _INACTIVE mode, reestablish a packet data convergence protocol, PDCP, entity and initialize PDCP state variables of the multicast MRB, and in response to that reception of a multicast MRB was continued in the RRC _INACTIVE mode, continue application of PDCP entity without reestablishment of the PDCP entity and initialization of the PDCP state variables for the multicast MRB after transition from RRC_INACTIVE mode to RRC_CONNECTED mode.

Clause 6bis relates to an apparatus in a user equipment of multicast MBS radio bearer, MRB, handling performed by a user equipment after cell reselection to a target base station, wherein the user equipment was released from a radio resource control connected, RRC _CONNECTED mode to a radio resource control inactive, RRC_INACTIVE, mode by a source base station, configured to transmit a request for transition from RRC _INACTIVE mode to RRC _CONNECTED mode to the target base station, receive a message for transition from RRC _INACTIVE mode to RRC _CONNECTED mode from the target base station, in response to that reception of a multicast MRB was not continued in the RRC _INACTIVE mode, initialize PDCP state variables of the multicast MRB, and in response to that reception of a multicast MRB was continued in the RRC _INACTIVE mode, continue application of PDCP entity without initialization of the PDCP state variables for the multicast MRB after transition from RRC_INACTIVE mode to RRC_CONNECTED mode.

Clause 7bis relates to the apparatus of clause 6bis further configured to reestablish a packet data convergence protocol, PDCP, entity, if requested in the received message.

Clause 7 relates to the apparatus of clause 6 further configured to transmit a message for completion of transition from RRC_INACTIVE mode to RRC_CONNECTED to the target base station, wherein the message for completion of transition from RRC_INACTIVE mode to RRC _CONNECTED mode to the target base station comprises an indication which MRBs were not initialized but continued.

Clause 8 relates to the apparatus of clause 6 or 7, wherein the message for transition from RRC _INACTIVE mode to RRC _CONNECTED mode comprises a request to reestablish a packet data convergence protocol, PDCP, entity and to initialize PDCP state variables of all MRBS of the user equipment.

Clause 9 relates to an apparatus in a target base station of multicast MBS radio bearer, MRB, handling performed after cell reselection of a user equipment from a source base station, wherein the user equipment was released from a radio resource control connected, RRC _CONNECTED mode to a radio resource control inactive, RRC _INACTIVE, mode by the source base station, configured to receive a request for transition from RRC_INACTIVE mode to RRC _CONNECTED mode from the user equipment, transmit a message for transition from RRC _INACTIVE mode to RRC_CONNECTED mode to the user equipment indication, and receive a message for completion of transition from RRC _INACTIVE mode to RRC _CONNECTED mode from the user equipment, wherein the message for completion of transition from RRC _INACTIVE mode to RRC _CONNECTED to the target base station comprises an indication which MRBs were not initialized but continued by the user equipment.

Clause 10 relates to the apparatus of clause 9, wherein the message for transition from RRC _INACTIVE mode to RRC _CONNECTED mode comprises a request to reestablish a packet data convergence protocol, PDCP, entity and to initialize PDCP state variables of all MRBS of the user equipment.

The herein described procedures may be applied per model or per functionality level (identified by an identifier) or across models or functionalities of a given entity, e.g., as a UE feature. It should be understood that the apparatuses described herein may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst embodiments have been described in relation to LTE and 5G NR, similar principles can be applied in relation to other networks and communication systems where enforcing fast connection re-establishment is required. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes exemplary embodiments, there are several variations and modifications which may be made to the disclosed solution without departing from the scope of the subject disclosure.

In general, the various exemplary embodiments may be implemented in hardware or special purpose circuits, software, logic or any combination thereof. Some aspects of the subject disclosure may be implemented in hardware, while other aspects may be implemented in firmware or software which may be executed by a controller, microprocessor or other computing device, although the subject disclosure is not limited thereto. While various aspects of the subject disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Example embodiments of the subject disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the figures may represent program processes, or interconnected logic circuits, blocks and functions, or a combination of program processes and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general-purpose computers, special purpose computers, microprocessors, digital signal processors (DSPs), application specific integrated circuits (ASICs), FPGA, gate level circuits and processors based on multicore processor architecture, as non-limiting examples.

Example embodiments of the subject disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiment of the subject disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of the subject disclosure as defined in the appended claims. Indeed, there is a further embodiment comprising a combination of one or more embodiments with any of the other embodiments previously discussed.

## Claims

1. A method of multicast Multicast Broadcast Service, MBS, Radio Bearer, MRB, handling performed by a target base station after cell reselection of a user equipment, UE, to a cell of the target base station, wherein the UE was released from a Radio Resource Control, RRC, connected, RRC_CONNECTED, mode to an RRC inactive, RRC_INACTIVE, mode by a source base station, comprising:
- receiving a request for transition from RRC_INACTIVE mode to RRC_CONNECTED mode from the UE;
- receiving continuity information, wherein the continuity information indicates whether or not at least one multicast MRB of an MBS session was not continued to be received by the UE in the RRC_INACTIVE mode; and
- in response to the continuity information indicating that the at least one multicast MRB of the MBS session was not continued in the RRC_INACTIVE mode, requesting the UE, in a message for transition from RRC _INACTIVE mode to RRC _CONNECTED mode, to reestablish a packet data convergence protocol, PDCP, entity and to initialize PDCP state variables for the at least one multicast MRB of the MBS session.

2. The method of claim 1 further comprising:
- in response to the continuity information indicating that the at least one multicast MRB was continued in the RRC _INACTIVE mode, allowing the UE to continue application of a PDCP entity without reestablishment of the PDCP entity and initialization of the PDCP state variables for the at least one multicast MRB of the MBS session after transition from RRC_INACTIVE mode to RRC_CONNECTED mode.

3. A method of multicast Multicast Broadcast Service, MBS, Radio Bearer, MRB, handling performed by a source base station after cell reselection of a user equipment, UE, to a cell of a target base station, wherein the UE was released from a Radio Resource Control, RRC, connected, RRC_CONNECTED, mode to an RRC inactive, RRC_INACTIVE, mode by the source base station, comprising:
- receiving a UE context retrieval request from the target base station; and
- transmitting continuity information to the target base station, wherein the continuity information indicates whether or not at least one multicast MRB of an MBS session was continued to be received by the UE in the RRC_INACTIVE mode.

4. The method of claim 3, wherein the continuity information is transmitted from the source base station within a UE context transferred in an Xn Application Protocol, XnAP, UE associated message over an Xn interface.

5. The method of claim 4, wherein the continuity information is comprised within an RRC context information element or in MBS session information element included in the XnAP UE associated message, wherein the MBS session information element includes the continuity information at MBS session level or MRB level.

6. A method of multicast Multicast Broadcast Service, MBS, Radio Bearer, MRB, handling performed by a user equipment, UE, after cell reselection to a cell of a target base station, wherein the UE was released from a Radio Resource Control, RRC, connected, RRC_CONNECTED, mode to an RRC inactive, RRC_INACTIVE, mode by a source base station, comprising:
- transmitting a request for transition from RRC_INACTIVE mode to RRC_CONNECTED mode to the target base station; and
- when reception of at least one multicast MRB of an MBS session was not continued in the RRC_INACTIVE mode, receiving, in a message for transition from RRC_INACTIVE mode to RRC_CONNECTED mode, a request to reestablish a packet data convergence protocol, PDCP, entity and to initialize PDCP state variables of the at least one multicast MRB of the MBS session from the target base station and reestablishing the packet data convergence protocol, PDCP, entity and initializing the PDCP state variables of the at least one multicast MRB of the MBS session when transitioning from RRC_INACTIVE mode to RRC_CONNECTED mode.

7. The method of claim 6 further comprising:
- when reception of at least one multicast MRB of the MBS was continued in the RRC_INACTIVE mode, continuing application of a PDCP entity without reestablishment and PDCP state variables without initialization for the at least one MRB of the MBS session when transitioning from RRC_INACTIVE mode to RRC_CONNECTED mode.

8. The method of claim 6 or claim 7 further comprising transmitting, to the target base station over an air interface, continuity information on whether or not the at least one multicast MRB of an MBS session was continued in the RRC_INACTIVE mode.

9. The method of claim 8, wherein the continuity information is transmitted together with the request for transition from RRC _INACTIVE mode to RRC _CONNECTED mode.

10. The method of claim 8 or claim 9, wherein the continuity information is transmitted within a message after reception of the request for transition from RRC _INACTIVE mode to RRC_CONNECTED mode and before transmission of the message triggering the transition from RRC_INACTIVE mode to RRC_CONNECTED mode.

11. The method of any one of claims 8 to 10, wherein the continuity information is included in an RRC message or as a medium access control, MAC, control element.

12. The method of claim 11, wherein an indication of a transmission of the RRC message for the continuity information is transmitted from the UE together with the request for transition from RRC_INACTIVE mode to RRC_CONNECTED mode.

13. The method of claim 11 or claim 12, wherein the transmission of the RRC message for the continuity information is enabled by small data transmission, SDT, procedures.

14. An apparatus of a base station for providing multicast Multicast Broadcast Service, MBS, Radio Bearer, MRB, handling after cell reselection of a user equipment, UE, to a cell of a target base station, wherein the UE was released from a Radio Resource Control, RRC, connected, RRC_CONNECTED,mode to an RRC inactive, RRC_INACTIVE, mode by a source base station, configured to execute the method of any one of claims 1 to 5.

15. An apparatus of a user equipment, UE, for providing multicast Multicast Broadcast Service, MBS, Radio Bearer, MRB, handling after cell reselection to a cell of a target base station, wherein the UE was released from a Radio Resource Control, RRC, connected, RRC_CONNECTED,mode to an RRC inactive, RRC_INACTIVE, mode by a source base station, configured to execute the method of any one of claims 6 to 13.
